(19) Europäisches Patentamt
European Patent Office
Office européen des brevets

(11) EP 1 432 745 B1

(12) # EUROPÄISCHE PATENTSCHRIFT

(45) Veröffentlichungstag und Bekanntmachung des Hinweises auf die Patenterteilung:
**05.01.2011 Patentblatt 2011/01**

(21) Anmeldenummer: **02800091.7**

(22) Anmeldetag: **18.09.2002**

(51) Int Cl.:
***C08F 20/34*** (2006.01) ***C08F 20/58*** (2006.01)
***C08F 8/30*** (2006.01) ***C08F 8/34*** (2006.01)
***G11B 7/24*** (2006.01)

(86) Internationale Anmeldenummer:
**PCT/EP2002/010446**

(87) Internationale Veröffentlichungsnummer:
**WO 2003/029311 (10.04.2003 Gazette 2003/15)**

(54) **WIEDERBESCHREIBBARES OPTISCHES AUFZEICHNUNGSMATERIAL MIT GUTER LÖSLICHKEIT**

REINSCRIBABLE OPTICAL RECORDING MATERIAL EXHIBITING GOOD SOLUBILITY

MATERIAU D'ENREGISTREMENT OPTIQUE REINSCRIPTIBLE PRESENTANT UNE BONNE SOLUBILITE

(84) Benannte Vertragsstaaten:
**AT BE BG CH CY CZ DE DK EE ES FI FR GB GR IE IT LI LU MC NL PT SE SK TR**

(30) Priorität: **27.09.2001 DE 10147723**
**28.05.2002 DE 10223648**

(43) Veröffentlichungstag der Anmeldung:
**30.06.2004 Patentblatt 2004/27**

(73) Patentinhaber: **Bayer MaterialScience AG**
**51368 Leverkusen (DE)**

(72) Erfinder:
- **BERNETH, Horst**
**51373 Leverkusen (DE)**
- **BIERINGER, Thomas**
**51519 Odenthal (DE)**
- **HAGEN, Rainer**
**51373 Leverkusen (DE)**
- **KOSTROMINE, Serguei**
**53913 Swisttal (DE)**

(56) Entgegenhaltungen:
**EP-A- 0 090 282** **EP-A- 0 360 457**
**EP-A- 0 410 205** **EP-A- 0 823 442**
**WO-A-00/54112** **WO-A-91/07449**
**WO-A-91/09885** **WO-A-97/44365**
**DE-A- 4 237 639** **DE-A- 4 339 712**
**DE-A- 4 339 862** **DE-C- 19 914 325**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 432 745 B1

## Beschreibung

Die vorliegende Erfindung betrifft ein optisches Aufzeichnungsmaterial für die binäre und/oder Multibit- und/oder Volumendatenspeicherung, dessen Herstellung und Verwendung als Speichermaterial.
Es ist seit langem bekannt, dass Azobenzole bei Lichteinwirkung Isomerisationsprozesse zeigen. [G. C. Hartley, Nature 140, 281 (1937)] Die isomeren Zustände und die Art der Übergangsreaktionen zwischen cis- und trans-Zustand wurden in verschiedenen Polymeren untersucht, welche Azobenzole dispergiert oder als Seitenketten oder integriert in die Hauptketten tragen. [C. S. Paik; H. Morawetz, Macromolecules 5, 171 (1972)].
Es ist auch bekannt, dass die Azobenzole, eingebracht in Polymere, eine gerichtete Orientierung im aktinischen Lichtfeld zeigen, falls sie mit polarisiertem Licht geeigneter Wellenlänge bestrahlt werden. Die Bestrahlung mit linear polarisiertem Licht führt so z.B. zu einem Überschuss senkrecht zur Polarisationsrichtung orientierter Azobenzole. Dies kann zum Aufbau einer lichtinduzierten Doppelbrechung im Polymer ausgenutzt werden. Die Orientierungsmechanismen der Azobenzole sind mehrfach in der Literatur beschrieben. [M. Eich; J. H. Wendorff; B. Reck; H. Ringsdorf; Makromol. Chem. Rapid Commun. 8, 59 (1987)] [Y. Q. Shen; H. Rau, Macromol. Chem. 192, 945 (1991)].
Die Möglichkeit, solche Polymere für die reversible optische Datenspeicherung einzusetzen (digital oder holographisch), wurde erstmals von Todorov beschrieben. [T. Todorov; L. Nikolova; N. Tomova, Appl. Opt. 23, 4309 (1984)] Es gibt nach dem Stand der Technik viele verschiedenartige Materialien für die binäre und/oder Multibit- und/oder Volumendatenspeicherung, die Azobenzole als Antennen für das einfallende Licht besitzen, siehe z.B. die Patentschriften EP-A 1 171 877, EP-A 1 166 187, DE-A 10 027 153, EP-A 1 166 188 und DE-A 100 271 529. Mehrere amorphe und flüssigkristalline Polymere wie auch Oligomere wurden synthetisiert und in Belichtungsexperimenten untersucht [J. J. A. Couture; R. A. Lessard, Appl. Opt. 27, 3368 (1988)] [M. Eich; J. Wendorff, J. Opt. Soc. Am. B, 7, 1428 (1990)] [A. Natansohn; P. Rochon; J. Gosselin; S. Xie; Macromolecules 25, 2268 (1992)].
DE 43 39 862 A1 beschreibt flächenhafte Gebilde aus einem Polymer mit einer Hauptkette und von der Hauptkette abzweigende Seitengruppen. Der vorliegende Baustein der Gruppe c) wird nicht beschrieben. Es wird weiterhin auch kein Hinweis auf die Löslichkeit des Aufzeichnungsmaterial gegeben.
EP 0823 442 A2 beschreibt photoadressierbare Seitengruppenpolymere, in denen sich durch Bestrahlung eine hohe Doppelbrechung induzieren lässt. Die Polymere enthalten nicht Gruppe c) als Baustein. Löslichkeitsprobleme werden nicht erwähnt.
WO 00/54112 beschreibt ein Aufzeichnungsmaterial für einen holographischen Volumenspeicher. Der Baustein der Gruppe c) wird nicht beschrieben.
Folgende drei Faktoren sind die Basis für hohe lichtinduzierbare Doppelbrechungswerte von solchen Polymeren:

1. Eine hohe Formanisotropie der molekularen Seitengruppen.

Formanisotrope Komponenten werden Mesogene genannt. Mesogene besitzen typischerweise eine Stäbchenform, die durch einen gestreckten, steifen Molekülteil erzielt wird. Das Längen-Breitenverhältnis, gemessen an den van-der-Waals-Radien, muss mindestens bei 4, bevorzugt zwischen 4 und 6 liegen. Die Formanisotropie führt zu einer Anisotropie der molekularen Polarisierbarkeit. Diese Art Moleküle ist in der Standardliteratur beschrieben [H. Kelker, R. Hatz "Handbook of Liquid Crystals", Verlag Chemie (1980)] [L. Bergmann; C. Schaefer "Lehrbuch der Experimentalphysik", Verlag de Gruyter, Band 5 "Vielteilchensysteme" (1992)].
Ein Azofarbstoff, vorliegend im isomeren *trans*-Zustand, gilt auch als mesogene molekulare Einheit, falls er die genannte Bedingung für die Formanisotropie erfüllt.

2. Eine hohe Anzahldichte formanisotroper Moleküle, d.h. ein hoher Azobenzolgehalt und / oder ein hoher Mesogengehalt im Polymer.

3. Eine stark anisotrope molekulare Orientierungsverteilung. Sie ist die Voraussetzung dafür, dass sich die molekularen Anisotropien (siehe Punkt 1) makroskopisch manifestieren.

Die Stärke der Anisotropie kann abgelesen werden am normierten linearen Absorptionsdichroismus $A_2$ mit $A_2 = (2A_\perp + A_\parallel)/(3A_0)$, wobei $A_\parallel$ und $A_\perp$ die Absorption des Polymeren parallel und senkrecht zur Polarisationsrichtung des aktinischen Lichts bezeichnen und $A_0$ für die Absorption vor der Bestrahlung steht. Die Absorption kann mit Hilfe eines Spektrometers bestimmt werden (z.B. Typ Varian CARY 4G, UV-NIS Spektrometer).
Eine allgemeinere Beschreibung der molekularen Orientierung liefert der Ordnungsparameter $P_2 = (A_\parallel - A_\perp)/(A_\parallel + 2A_\perp)$, wobei $P_2$ =+1 und $P_2$ = -0,5 die Grenzwerte für die perfekte Orientierung der molekularen Übergangsdipolmomente parallel und senkrecht zur Polarisationsrichtung des Lichts darstellen. $P_2$ = 0 bezeichnet den isotropen Fall.
Insbesondere die Seitenkettenpolymeren, die neben den Azobenzolen noch formanisotrope Komponenten als

Seitenketten nutzen, zeichnen sich durch hohe lichtinduzierbare Doppelbrechung aus, weil sie die oben stehenden drei Voraussetzungen erfüllen können.

Im allgemeinen gilt, dass Polymere umso schlechter löslich sind, je besser die oben genannten Punkte 1 und 2 erfüllt werden, d.h. je höher das Potential für große Doppelbrechungswerte ist. Mikroskopisch sind Dipolkräfte, geometrische und entropische Kräfte dafür verantwortlich.

Viele Lösemittel, z. B. Alkohole, die ungiftig oder minder giftig sind, kommen daher als Lösemittel nicht in Frage. Gute Lösemittel für solche Polymere sind aber oft giftig, karzinogen und/ oder fruchtschädigend. In vielen Fällen ist auch die Flüchtigkeit durch ihren niedrigen Siedepunkt zu hoch. Ein Beispiel ist Tetrahydrofuran (THF). Im folgenden wird beschrieben, warum solche Lösemittel für die Herstellung von Datenspeichern, die besonders hohe ökologische Ansprüche bei der Herstellung erfüllen sollen, von Nachteil sind.

Um Polymere als Funktionsschicht in einem Datenspeicher einsetzen zu können, müssen diese als homogene Filme präpariert werden. Zur Herstellung dünner Filme gibt es mehrere Gieß, Tropf oder Streichverfahren. Ein Standardverfahren bei der großtechnischen Produktion z.B. von Recordable Compact Disks "CD-R" und ihren Nachfolgeformaten, ist das Drehschleuderverfahren (Spin Coating). Dabei werden die Farbstoffe gelöst und die Lösung automatisiert auf ein sich drehendes Substrat (z.B. Polycarbonat-Scheibe) aufgetropft. Nach Verdampfen des Lösemittels verbleibt ein dünner Film des Aufzeichnungsmaterials. Um toxikologisch problematisches abgedampftes Lösemittel zum Schutz der Umgebung einzufangen, müssten die Produktionslinien für Datenspeicher aufwendig gekapselt werden, was ökonomisch nachteilig ist.

Es wird weiterhin vermerkt, dass THF Polycarbonat anlöst. Eine eingeprägte Groove-Struktur eines Polycarbonatsubstrats würde also bei Kontakt mit THF zerstört werden. Zum Schutz der Groove-Struktur müsste eine THF-resistente Deckschicht auf Polycarbonat aufgebracht werden.

Reversibles Schreiben und Löschen von Doppelbrechungswerten ist eine Grundvoraussetzung für den Einsatz eines photoadressierbaren Polymers als Funktionsschicht in einem wiederbeschreibbaren Datenspeicher. Die bisher beschriebenen Polymere haben den Nachteil, dass diese die Reversibilität nicht ausreichend gewährleisten.

Es bestand demnach der Bedarf nach einem Aufzeichnungsmaterial, das lichtinduzierbare Doppelbrechungen zeigt und das sich in einem oder mehreren einfachen oder modifizierten Alkoholen auflöst, die ungiftig oder zumindest minder giftig sind. Weiterhin sollte eine gute Reversibilität der Belichtungsdynamik erfüllt sein.

Es hat sich überraschenderweise gezeigt, dass die in dieser Anmeldung aufgeführten Aufzeichnungsmaterialien die genannten Anforderungen erfüllen.

Gegenstand der Erfindung ist
ein polymeres oder oligomeres organisches amorphes Material aus Hauptketten und Seitenketten, wobei die Hauptkette der folgenden Grundstrukturen entstammen: Polyacrylat, Polymethacrylat, Polyacrylamid, Polymethacrylamid, Polysiloxan, Polyharnstoff, Polyurethan, Polyester, Polystyrol oder Zellulose und die Seitenketten

a) mindestens einen Azobenzolfarbstoff,
b) mindestens eine formanisotrope Gruppierung der Formel (III)

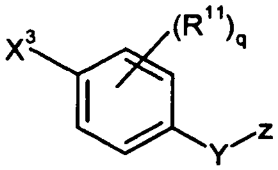

(III),

worin Z für einen Rest der Formeln

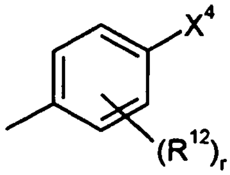

(IIIa)

oder

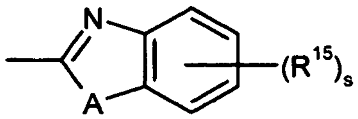 (IIIb)

steht, worin

A für O S oder N-$C_1$- bis $C_4$-Alkyl steht,

$X^3$ für eine Spacergruppe der Formel -$X^{3'}$-$(Q^2)_j$-$T^2$-$S^2$- steht,

$X^4$ für $X^{4'}$-$R^{13}$ steht,

$X^{3'}$ und $X^{4'}$ unabhängig voneinander für eine direkte Bindung, -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)- oder -(C$NR^8$-$NR^5$)- stehen,

$R^5$, $R^8$ und $R^{13}$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen oder $X^{4'}$-$R^{13}$ für Wasserstoff, Halogen, Cyan, Nitro, $CF_3$ oder $CCl_3$ stehen kann,

$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen,

Y für eine einfache Bindung, -COO-, OCO-, -CONH-, -NHCO-, -CON($CH_3$)-, -N($CH_3$)CO-, -O-, -NH- oder -N ($CH_3$)- steht,

$R^{11}$, $R^{12}$, $R^{15}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-$C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)- stehen,

q, r und s unabhängig voneinander für eine ganze Zahl von 0 bis 4, vorzugsweise 0 bis 2 stehen,

$Q^2$ für -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, -(C=$NR^8$)-, -(C$NR^8$-$NR^5$)-, -$(CH_2)_p$-, p- oder m-$C_6H_4$- oder einen zweibindigen Rest der Formeln

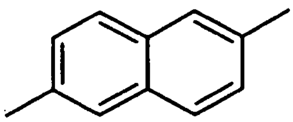 oder 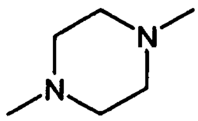

steht,

j für eine ganze Zahl von 0 bis 4 steht, wobei für j > 1 die einzelnen $Q^1$ verschiedene Bedeutungen haben können,

$T^2$ für -$(CH_2)_p$- steht, wobei die Kette durch -O-, -$NR^9$-, oder -OSi$R^{10}_2$O-unterbrochen sein kann,

$S^2$ für eine direkte Bindung, -O-, -S- oder -$NR^9$- steht,

p für eine ganze Zahl von 2 bis 12, vorzugsweise 2 bis 8, insbesondere 2 bis 4 steht,

$R^9$ für Wasserstoff, Methyl, Ethyl oder Propyl steht und

$R^{10}$ für Methyl oder Ethyl steht und

c) mindestens ein Monomer ausgewählt aus

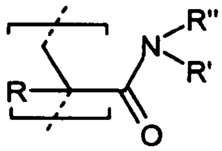

(VI),

wobei

R' und R" entweder unabhängig voneinander $C_nH_{2n+1}$ oder $C_nH_{2n}$-OH bedeuten, mit n = 1 bis 10, bevorzugt n = 1 bis 3, oder gemeinsam eine - $C_nH_{2n}$-Brücke mit n = 2 bis 6, bevorzugt n = 4 bis 5, eine - $(C_2H_4\text{-}O)_n$-$C_2H_4$-Brücke , mit n = 1 bis 5, bevorzugt n = 1 bis 3, eine - $C_2H_4$-$N(C_nH_{2n+1})$- $C_2H_4$-Brücke, mit n = 1 bis 6, bevorzugt n = 1 bis 3 und
R für Wasserstoff oder Methyl steht,

wobei Gruppe c) als Monomerbaustein in der Hauptkette enthalten ist.

Bevorzugt ist ein Material, wobei die Hauptkette den Grundstrukturen Polyacrylat, Polymethacrylat und Polyacrylamid entstammt.

Gegenstand der Erfindung ist weiterhin ein Material wie oben beschrieben, wobei die Gruppen a) und/oder b) Hydroxyethylgruppen tragen und die Gruppe c) enthalten sein kann.

Die erfindungsgemäßen Polymeren liegen in der Regel unterhalb der Klärtemperatur in einem amorphen Zustand vor.

Die erfindungsgemäßen Polymeren und Oligomeren besitzen vorzugsweise Glasübergangstemperaturen Tg von mindestens 40°C. Die Glasübergangstemperatur kann beispielsweise nach B. Vollmer, Grundriss der Makromolekularen Chemie, S. 406-410, Springer-Verlag, Heidelberg 1962, bestimmt werden.

Die erfindungsgemäßen Polymeren und Oligomeren besitzen ein als Gewichtsmittel bestimmtes Molekulargewicht von 5.000 bis 2.000.000 g/mol, vorzugsweise von 8.000 bis 1.500.000 g/mol, bestimmt durch Gelpermeationschromatographie (geeicht mit Polystyrol).

Bei den erfindungsgemäß bevorzugt verwendeten Polymeren sind Azofarbstoffe, in der Regel über flexible Spacer getrennt, als Seitenkette an die Polymerhauptkette kovalent gebunden. Die Azofarbstoffe treten mit der elektromagnetischen Strahlung in Wechselwirkung und verändern dabei ihre räumliche Orientierung, so dass im Polymer Doppelbrechung mittels Lichteinwirkung induziert und wieder gelöscht werden kann.

Die Mesogene sind in der Regel in der gleichen Art angebunden wie die Azofarbstoffe. Sie müssen das aktinische Licht nicht notwendigerweise absorbieren, weil sie als passive Molekülgruppe fungieren. Sie sind also nicht photoaktiv im obigen Sinne. Ihre Aufgabe ist es, die lichtinduzierbare Doppelbrechung zu verstärken und nach der Lichteinwirkung zu stabilisieren.

Die zur Verbesserung der Löslichkeit des Polymeren eingebauten molekularen Gruppen können auf drei unterschiedliche Arten eingebaut sein:

1. Als Monomereinheiten, statistisch in die Hauptketten integriert. Diese Monomereinheiten sind nicht mit Azobenzolen oder Mesogenen funktionalisiert.

2. Als Seitengruppe an der Bindungsstelle zwischen Azobenzol und Spacer.

3. Als Endgruppe am freien Ende des Azofarbstoffs.

Azofarbstoffe haben bevorzugt die folgende Struktur der Formel (I)

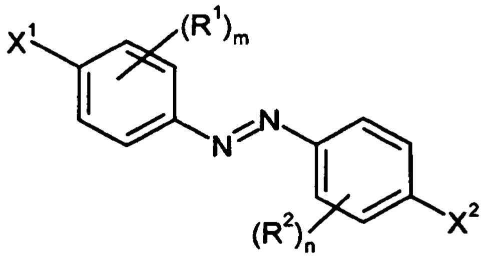

(I),

worin

$R^1$ und $R^2$ unabhängig voneinander für Wasserstoff oder einen nichtionischen Substituenten stehen und

m und n unabhängig voneinander für eine ganze Zahl von 0 bis 4, vorzugsweise 0 bis 2 stehen.

$X^1$ und $X^2$ bedeuten $-X^{1'}-R^3$ bzw. $X^{2'}-R^4$,
worin

$X^{1'}$ und $X^{2'}$ für eine direkte Bindung, -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$ oder $-(CNR^8-NR^5)-$ stehen,

$R^3$, $R^4$, $R^5$ und $R^8$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl- (C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-$(SO_2)$-, $C_3$- bis $C_{10}$-Cycloalkyl-$(SO_2)$-, $C_2$- bis $C_{20}$-Alkenyl-$(SO_2)$- oder $C_6$- bis $C_{10}$-Aryl-$(SO_2)$- stehen oder

$X^{1'}-R^3$ und $X^{2'}-R^4$ für Wasserstoff, Halogen, Cyan, Nitro, $CF_3$ oder $CCl_3$ stehen können,

$R^6$ und $R^7$ unabhängig voneinander für Wasserstoff, Halogen, $C_1$- bis $C_{20}$-Alkyl, $C_1$-bis $C_{20}$-Alkoxy, $C_3$- bis $C_{10}$-Cycloalkyl, $C_2$- bis $C_{20}$-Alkenyl oder $C_6$- bis $C_{10}$-Aryl stehen.

Die Alkyl-, Cycloalkyl-, Alkenyl- und Arylreste können ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein.

Unter Halogen ist Fluor, Chlor, Brom und Iod zu verstehen, insbesondere Fluor und Chlor.

Azofarbstoffe, die löslichkeitsverbessernde Eigenschaften im Sinne der Erfindung haben, sind ebenfalls nach Formel (I) incl. der oben angegebenen Bedeutungen zu beschreiben, wobei aber $R^5$ für $C_2$- bis $C_{10}$-Alkyl-OH, bevorzugt $C_2$- bis $C_4$-Alkyl-OH steht, oder für $CH_2-(CH-OH)-CH_2-OH$ steht.

$X^1$ (oder $X^2$) stehen für eine Spacergruppe insbesondere in der Bedeutung $X^{1'}-(Q^1)_i-T^1-S^1-$,
wobei

$X^{1'}$ die oben angegebene Bedeutung besitzt,

$Q^1$ für -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$, $-(CNR^8-NR^5)-$, $-(CH_2)_p-$, p- oder m-$C_6H_4$- oder einen zweibindigen Rest der Formeln

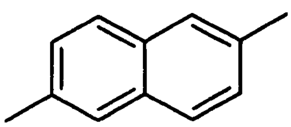

oder

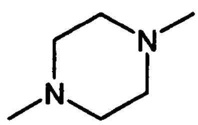

steht,

i für eine ganze Zahl von 0 bis 4 steht, wobei für i > 1 die einzelnen $Q^1$ ver- schiedene Bedeutungen haben können,

$T^1$ für $-(CH_2)_p-$ steht, wobei die Kette durch -O-, $-NR^9-$, oder $-OSiR^{10}{}_2O-$ unter- brochen sein kann,

$S^1$ für eine direkte Bindung, -O-, -S- oder $-NR^9-$ steht,

p für eine ganze Zahl von 2 bis 12, vorzugsweise 2 bis 8, insbesondere 2 bis 4 steht,

$R^9$ für Wasserstoff, Methyl, Ethyl oder Propyl steht,

$R^{10}$ für Methyl oder Ethyl steht und

$R^5$ bis $R^8$ die oben angegebene Bedeutung besitzen.

Die kovalente Verbindung von Monomeren der oben beschriebenen Hauptkettengrundstrukturen mit den Azofarbstoffen der Formel (I) über Spacer liefert Farbstoffmonomere. Bevorzugte Farbstoffmonomere für Polyacrylate oder -methacrylate haben die Formel (II)

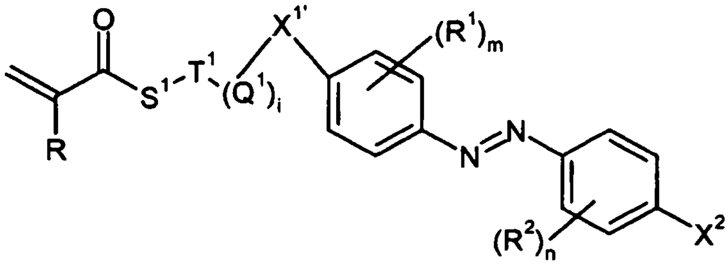

(II),

worin

R für Wasserstoff oder Methyl steht und

die anderen Reste die oben angegebene Bedeutung besitzen. Besonders geeignet sind Farbstoffinonomere obiger Formel (II), worin

$X^2$ CN oder Nitro und bevorzugt $R^1$ gleich CN ist,

und die Reste R, $S^1$, $T^1$, $Q^1$, $X^{1'}$, und $R^2$ sowie i, m und n die oben angegebene Bedeutung haben.

Ebenfalls geeignet sind Farbstoffmonomere der folgenden Formel (IIa)

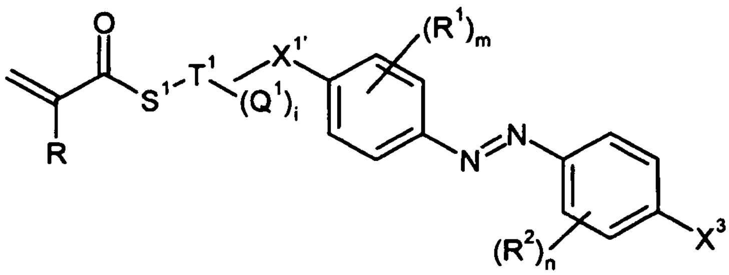

(IIa),

worin

$x^3$ Wasserstoff, Halogen oder $C_1$- bis $C_4$-Alkyl, vorzugsweise Wasserstoff bedeutet, und

die Reste R, $S^1$, $T^1$, $Q^1$, $X^{1'}$, $R^1$ und $R^2$ sowie i, m und n die oben angegebene Bedeutung haben.

Ebenfalls geeignet sind Farbstoffmonomere der Formel (IIb)

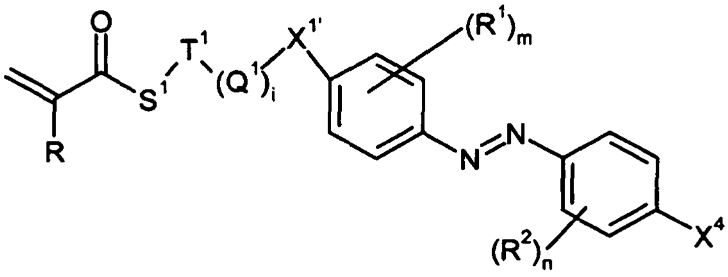

(IIb),

worin

$X^4$ Cyano oder Nitro bedeutet und

die Reste R, $S^1$, $T^1$, $Q^1$, $X^{1'}$, $R^1$ und $R^2$ sowie i, m und n die oben angegebene Bedeutung haben.

Bevorzugte Monomereinheiten mit Azofarbstoffen, die eine löslichkeitsverbessernde Komponente an der Bindungsstelle zum Spacer und / oder an der freien Stelle tragen, haben die Form:

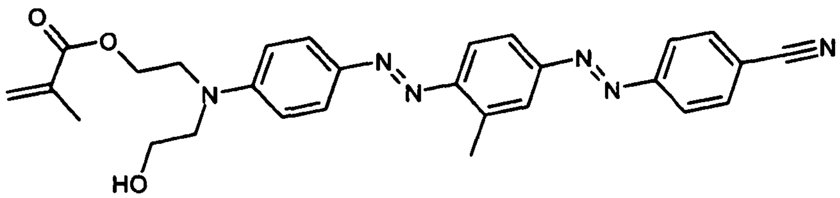

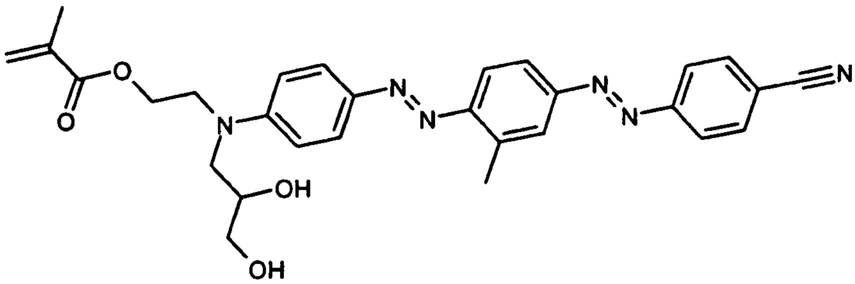

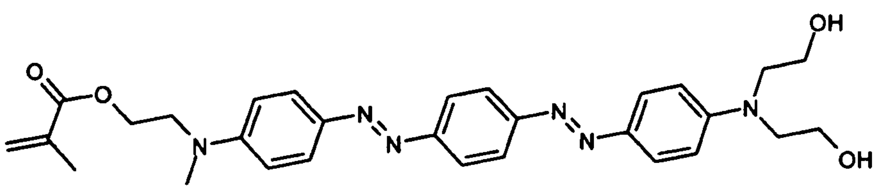

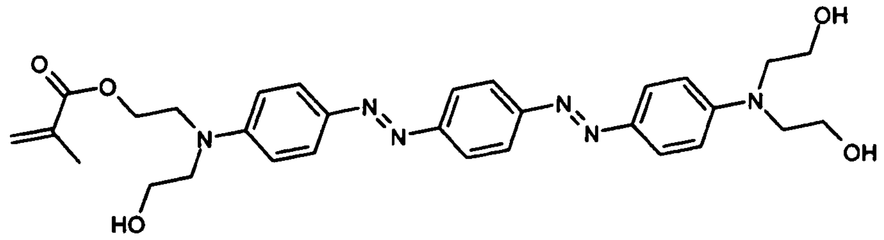

Bevorzugte Monomere mit solchen formanisotropen Gruppierungen für Polyacrylate oder -methacrylate haben dann die Formel (IV)

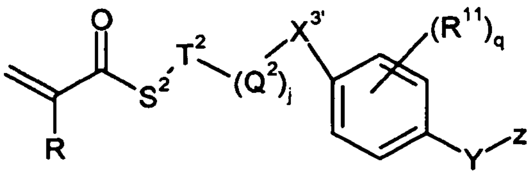

(IV),

worin

R für Wasserstoff oder Methyl steht und

die anderen Reste die oben angegebene Bedeutung besitzen.

Die Alkyl-, Cycloalkyl-, Alkenyl- und Arylreste können ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein.

Unter Halogen ist Fluor, Chlor, Brom und Iod zu verstehen, insbesondere Fluor und Chlor.

Im folgenden Absatz wird der Ausdruck "funktionale Bausteine" verwendet. Funktionale Bausteine sind Monomerbausteine, die entweder eine Azo-Gruppe enthalten oder die eine mesogene Einheit enthalten. Beide so bezeichneten Molekülarten sind an dem Prozess der Photoorientierung des entsprechenden Polymers beteiligt. Das heißt, sie sind funktionelle Gruppen. Diese funktionellen Gruppen oder Bausteine müssen von den "verdünnenden Bausteinen" unterschieden werden. "Verdünnende Bausteine" sind Monomerbausteine, die keine orientierbaren Seitenketten aufbauen können. Sie sind lediglich Teil des Polymerrückgrats und verringern den Anteil der funktionalen Bausteine im Polymer.

Neben diesen funktionalen Bausteinen können die erfindungsgemäßen Polymere auch Bausteine enthalten, die hauptsächlich zur Erniedrigung des prozentualen Gehalts an funktionalen Bausteinen, insbesondere an Farbstoffbausteinen, dienen. Neben dieser Aufgabe können sie auch für andere Eigenschaften der Polymere verantwortlich sein, wie z.B. die Glasübergangstemperatur, Flüssigkristallinität, Filmbildungseigenschaft, usw.

Die Monomereinheiten zur Verbesserung der Löslichkeit haben die folgende Struktur der Formel (VI)-(VIa):

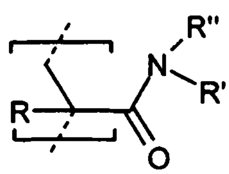

(VI),

wobei

R' und R" entweder unabhängig voneinander $C_nH_{2n+1}$ oder $C_nH_{2n}$-OH bedeuten, mit n = 1 bis 10, bevorzugt n = 1

bis 3, oder gemeinsam eine - $C_nH_{2n}$-Brücke mit n = 2 bis 6, bevorzugt n = 4 bis 5, eine - $(C_2H_4\text{-}O)_n$ $C_2H_4$-Brücke, mit n = 1 bis 5, bevorzugt n = 1 bis 3, eine - $C_2H_4$-N($C_nH_{2n+1}$)- $C_2H_4$-Brücke, mit n = 1 bis 6, bevorzugt n = 1 bis 3,

mit R = H oder $CH_3$ ,

Erfindungsgemäße Polyacrylate, Polymethacrylate und Poly(meth)acrylate/Poly-(meth)acrylamide enthalten dann vorzugsweise als wiederkehrende Einheiten solche der Formeln (VII), vorzugsweise solche der Formeln (VII) und (VIII) oder der Formeln (VII) und (IX) oder solche der Formeln (VII), (VIII)

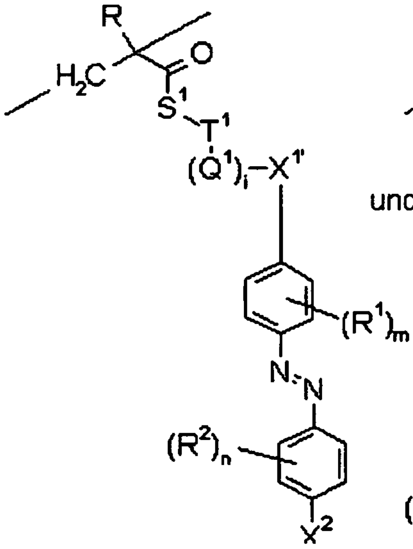

(VII)

und

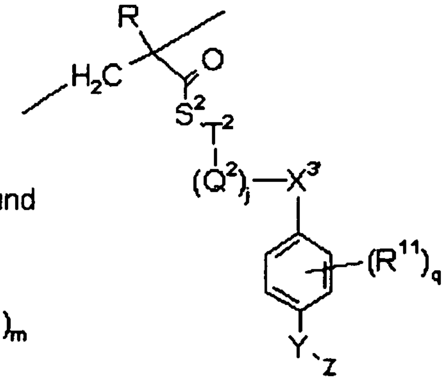

(VIII)

bzw. statt der Formel (VII) wiederkehrende Einheiten der Formeln (VIIa) oder (VIIb)

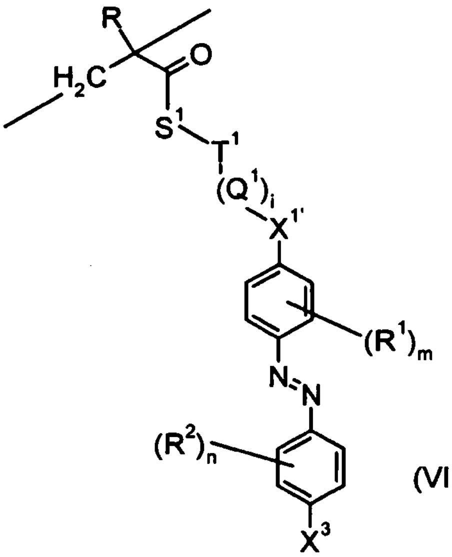

(VIIa)

oder

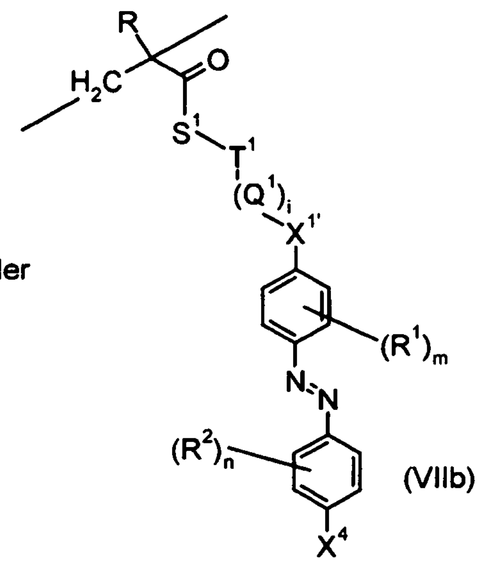

(VIIb)

worin die Reste die oben angegebenen Bedeutungen besitzen. Es können auch mehrere der wiederkehrenden Einheiten der Formel (VII) und/oder der wiederkehrenden Einheiten der Formeln (VIII) und/oder (IX) vorhanden seinEs können auch Monomereinheiten der Formel (VI) zusätzlich vorhanden sein.

Das Mengenverhältnis zwischen V, VI, VII, VIII und gegebenenfalls (VI) ist beliebig. Bevorzugt beträgt die Konzentration von VII zwischen 1 und 99% bezogen auf das jeweilige Gemisch. Das Verhältnis zwischen VII und VIII beträgt zwischen 1:99 und 99:1, bevorzugt zwischen 10:90 und 90:10, ganz besonders bevorzugt zwischen 60:40 und 40:60. Der Anteil V beträgt 0 bis 90 %, vorzugsweise 20 bis 80 %, besonders bevorzugt 30 bis 70 % bezogen auf das jeweilige Gemisch. Der Anteil VI beträgt 0 bis 90 %, vorzugsweise 20 bis 80 %, besonders bevorzugt 30 bis 70 % bezogen auf das jeweilige Gemisch.

Durch die Struktur der Polymeren und Oligomeren werden die zwischenmolekularen Wechselwirkungen der Strukturelemente der Formeln (VII) untereinander oder der Formeln (VII) und (VIII) untereinander so eingestellt, dass die Ausbildung flüssigkristalliner Ordnungszustände unterdrückt wird und optisch isotrope, transparente nichtstreuende Filme, Folien, Platten oder Quader, insbesondere Filme oder Beschichtungen hergestellt werden können. Andererseits sind die zwischenmolekularen Wechselwirkungen dennoch stark genug, dass bei Bestrahlung mit Licht und/oder Einwirkung statischer elektrischer Felder ein photochemisch induzierter, kooperativer, gerichteter Umorientierungsprozess der lichtaktiven und der nicht lichtaktiven Seitengruppen bewirkt wird.

Bevorzugt treten zwischen den Seitengruppen der wiederkehrenden Einheiten der Formel (VII) und zwischen denen der Formeln (VII) und (VIII) Wechselwirkungskräfte auf, die ausreichen, dass die Konfigurationsänderung der Seitengruppen der, Formel (VII) eine gleichgerichtete - sogenannte kooperative - Umorientierung der anderen Seitengruppen ((von und/oder (VIII)) bewirkt.

Die Herstellung der Polymeren und Oligomeren kann nach literaturbekannten Verfahren durchgeführt werden, beispielsweise nach DD-A 276 297, DE-A 3 808 430, Makromolekulare Chemie 187, 1327-1334 (1984), SU-A 887 574, Europ. Polym. 18, 561 (1982) und Liq. Cryst. 2, 195 (1987).

Eine weitere Methode, das Aufzeichnungsmaterial oder das erfindungsgemäße Polymer herzustellen enthält ein Verfahren, wobei mindestens ein Monomer ohne weiteres Lösungsmittel polymerisiert wird wobei bevorzugt radikalisch polymerisiert wird, und besonders bevorzugt durch radikalische Starter und/oder UV-Licht und/oder thermisch initiiert wird.

Man arbeitet bei Temperaturen zwischen 20°C und 200°C, bevorzugt zwischen 40°C und 150°C, besonders bevorzugt 50°C und 100°C und ganz besonders bevorzugt um 60°C.

In einer besonderen Ausführungsform wird als radikalischer Starter AIBN (Azoisobutyronitril) verwendet.

Oft hat es sich als günstig erwiesen, dass man ein weiteres, bevorzugt flüssiges Monomer mit einsetzt. Darunter werden bei den Reaktionstemperaturen flüssige Monomere verstanden, die bevorzugt olefinisch ungesättigte Monomere sind, besonders bevorzugt auf Basis der Acrylsäure und Methacrylsäure, ganz besonders bevorzugt Methylmethacrylat.

## Beispiele

### Beispiel 1: Synthese von Monomeren

**1.1**

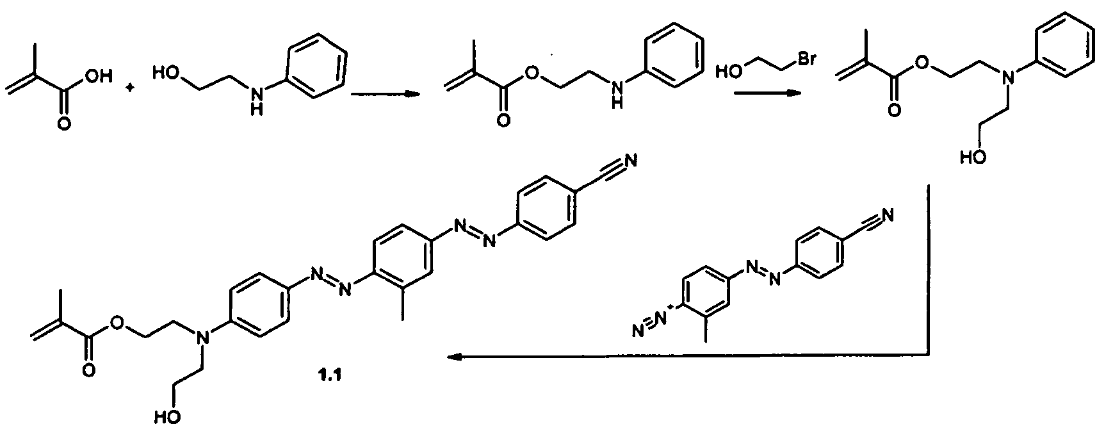

1.1

200 g 2- Anilinoethanol, 580 ml Methacrylsäure und 115,6 g Hydrochinon und 880 ml Chloroform werden unter Rühren

zum Rückfluss gebracht. 148 ml konz. Schwefelsäure werden langsam zugetropft. Das Reaktionswasser wird azeotrop entfernt. Nach dem Abkühlen wird zur Reaktionsmischung Wasser zugegeben und ein pH von 6 wird mit konzentrierter wässriger Soda-Lösung eingestellt. Die organische Phase wird abgetrennt, und das Lösungsmittel einrotiert. Das Produkt wird chromatographisch gereinigt (Kieselgel; Methylenchlorid) Ausbeute von N-[2-(Methacryloyloxy)ethyl]-anilin beträgt 112 g (34 % d.Th).

30 g 2-Bromethanol werden bei 70°C in Argonatmosphäre vorgelegt. 30 g N-[2-(Methacryloyloxy)ethyl]-anilin werden langsam zugegeben. Die Reaktionsmischung wird 24 h bei 100°C nachgerührt, nach dem Abkühlen ins Chloroform gebracht und mit Wasser gewaschen. Nach dem Trocknen mit Magnesiumsulfat wird Chloroform entfernt und das Produkt chromatographisch gereinigt (Aluminiumoxid; Dioxan). Die Ausbeute von N-(Hydroxyethyl)-N-[2-(Methacryloyloxy)ethyl]-anilin beträgt 10,2 g (28 %).

| | |
|---|---|
| Elementaranalyse: | $C_{14}H_{19}NO_3$ (249,31) |
| Ber.: | C67,45; H7,68; N5,62; |
| Gef.: | C67,30; H7,40; N5,60. |

5,7 g 4-Amino-3-Methyl-4'-Cyanoazobenzol werden in eine Mischung aus 40 ml Essigsäure und 13 ml Salzsäure bei 5°C vorgelegt, durch langsame Zugabe von 8,6 g 30 %-igen Natriumnitrit-Lösung diazotiert und auf 6g N-(Hydroxyethyl)-N-[2-(Methacryloyloxy)ethyl]-anilin in 200ml Methanol bei 15°C gekuppelt. Der pH-Wert von 2,0 - 2,5 wird durch Zugabe von Natriumacetat gehalten. Der Niederschlag wird nach 1 h Nachrühren abfiltriert, mit Wasser und Methanol nachgewaschen, getrocknet und im Dioxan durch eine Schicht von Aluminiumoxid filtriert. Die Ausbeute von 1.1 beträgt 6,2 g. Fp 148°C.

| | |
|---|---|
| Elementaranalyse: | $C_{28}H_{28}N_6O_3$ (496,57) |
| Ber.: | C67,73; H5,68; N16,92; |
| Gef.: | C67,80; H5,70; N16,70 |

**1.2**

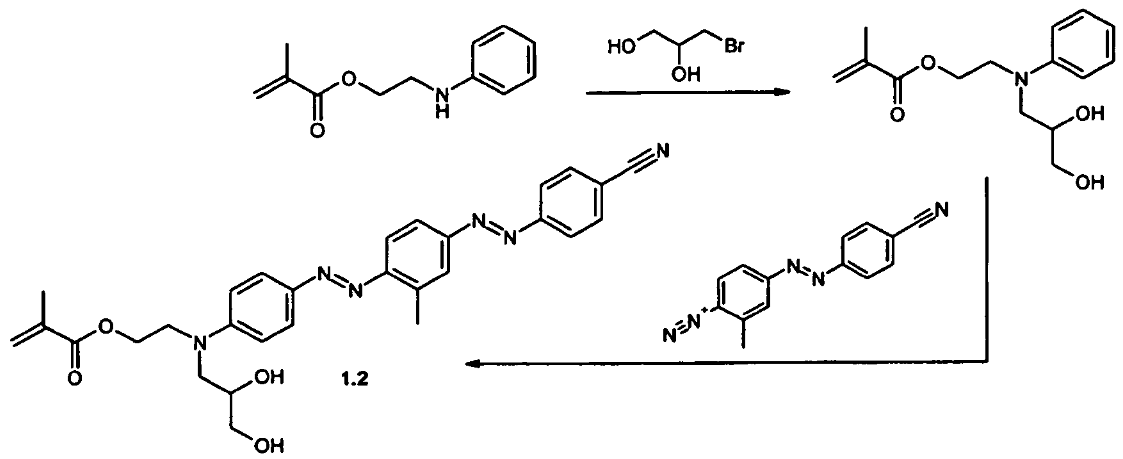

N-(2,3-Dihydroxypropyl)-N-[2-(Methacryloyloxy)ethyl]-anilin wird analog zu 1.1 aus 3-Brom-1,2-Propandiol und N-[2-(Methacryloyloxy)ethyl]-anilin hergestellt. Das Produkt wird chromatographisch gereinigt (Aluminiumoxid; zunächst Toluol/Dioxan=1:1; danach Dioxan). Die Ausbeute beträgt 28 %.

Monomer 1.2 wird analog zu 1.1 durch Diazotierung von 4-Amino-3-Methyl-4'-Cyanoazobenzol und Kupplung auf N-(2,3-Dihydroxypropyl)-N-[2-(Methacryloyloxy)ethyl]-anilin hergestellt. Die chromatographische Reinigung erfolgt auf Kieselgel in Toluol/Dioxan=1:1. Die Ausbeute beträgt 30 %. Fp 148°C.

## 1.3

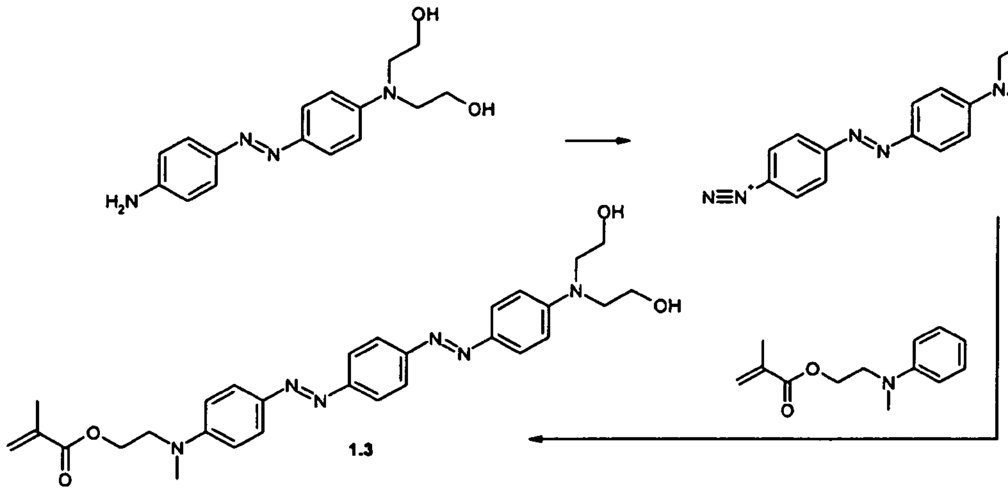

1.3

10,7 g 2,2'-[4-(4-Aminophenylazo)-phenylimino]-diethanol werden in eine Mischung aus 60 ml Wasser und 20 ml Salzsäure bei 5°C vorgelegt, durch langsame Zugabe von 12,8 g 30%-igen Natriumnitrit-Lösung diazotiert und auf 10g N-Methyl-N-[2-(Methacryloyloxy)ethyl]-anilin in 300ml Methanol bei 15°C gekuppelt. pH-Wert von 2,7 wird durch Zugabe von Natriumacetat gehalten. Der Niederschlag wird nach 1 h nachrühren abfiltriert, mit Wasser nachgewaschen, getrocknet und aus Xylol umkristallisiert. Ausbeute von 1.3 beträgt 7,2 g. Fp 149°C.

| | |
|---|---|
| Elementaranalyse: | $C_{29}H_{34}N_6O_4$ (530,63) |
| Ber.: | C65,64; H6,46; N15,84; |
| Gef.: | C65,70; H6,40; N15,70 |

## 1.4

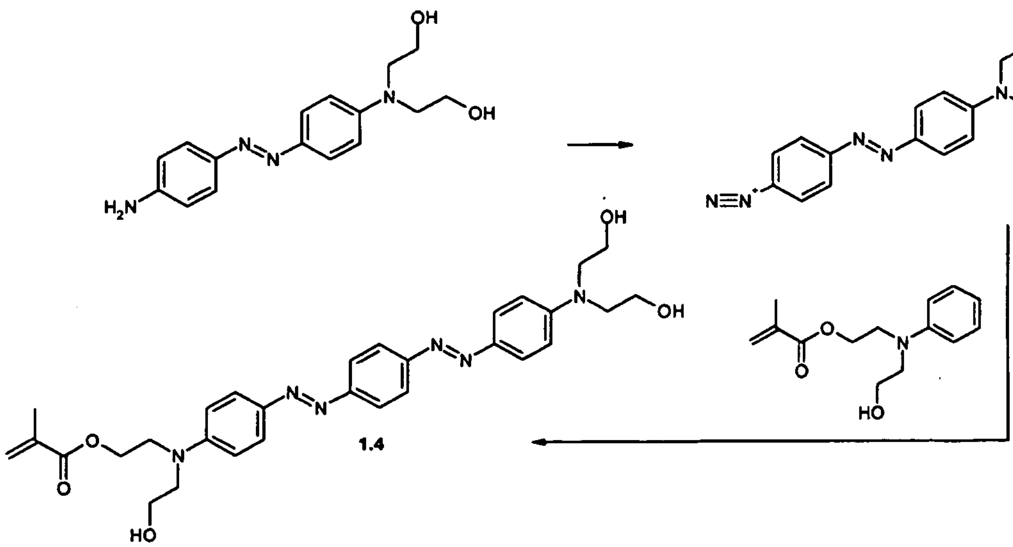

1.4

12,8 g 2,2'-[4-(4-Aminophenylazo)-phenylimino]-diethanol werden in eine Mischung aus 60 ml Wasser und 20

ml Salzsäure bei 5°C vorgelegt, durch langsame Zugabe von 15,2 g 30%-igen Natriumnitrit-Lösung diazotiert und auf 10,6 g N-(Hydroxyethyl)-N-[2-(Methacryloyloxy)ethyl]-anilin in 300ml Methanol bei 15°C gekuppelt. pH-Wert von 2,7 wird durch Zugabe von Natriumacetat gehalten. Der Niederschlag wird nach 1 h nachrühren abfiltriert, mit Wasser nachgewaschen, getrocknet und aus Xylol umkristallisiert. Ausbeute von 1.4 beträgt 15 g. Fp 105°C.

| | |
|---|---|
| Elementaranalyse: | $C_{30}H_{36}N_6O_5$ (560,66) |
| Ber.: | C64,27; H6,47; N14,99; |
| Gef.: | C64,10; H6,40; N14,20 |

**Beispiel 2a: Verbesserung der Löslichkeit durch den Einbau von Dimethylacrylamid**

Beschrieben werden im folgenden erfindungsgemäße Copolymere mit der Struktur:

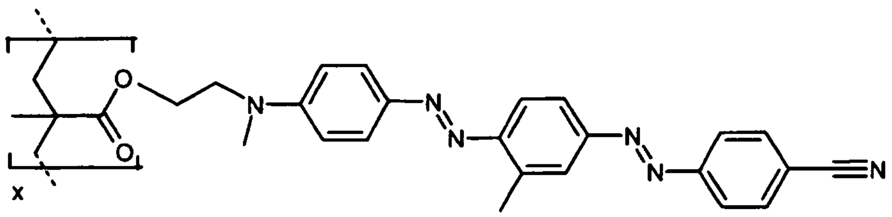

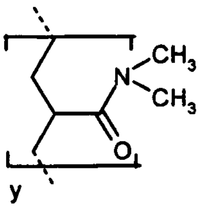

Das x-Monomer ist mit einem Azobenzol-Farbstoffmolekül funktionalisiert. Das y-Monomer besteht aus Dimethylacrylamid (DMAA).

Es wurden fünf Copolymere hergestellt, die sich durch das Monomerverhältnis x:y unterscheiden (s. untenstehende Tabelle; Bezeichnung der Polymere mit laufender Nummer von 1 bis 5). Sie werden mit dem Homopolymer verglichen (x = 100%; Bezeichnung: Polymer 6).

Die Molekulargewichte der Polymere wurden mittels Gelpermeationschromatographie (GPC) bestimmt. Die GPC wurde unter Verwendung von N,N-Dimethylacetamid (DMAC) als Lösungsmittel durchgeführt. Die Auswertung der Signale erfolgte auf der Grundlage einer für PMMA bei 60°C in DMAC gültigen Eichbeziehung. Die Werte für die Gewichtsmittel lagen im Bereich 10500 und 13300 g/mol. Die Werte für die Zahlenmittel lagen zwischen 5500 und 6810 g/mol.

Die Glasübergangstemperaturen wurden mittels Wärmeflusskalorimetrie bestimmt. Gerät: Kalorimeter DSC-2 der Firma Perkin-Elmer. Es wurden zwei Aufheizungen von Raumtemperatur bis 300°C mit einer Heizrate von 20 K/min vorgenommen. Zwischen den Aufheizungen wurde mit 320 K/min schnell auf Raumtemperatur abgekühlt, jeweils bei Stickstoffspülung (30 ml/min). Die Glasübergangstemperaturen der Polymere 1 bis 6 lagen für den zweiten Heizvorgang zwischen 92 und 104°C.

Die Löslichkeit der Polymere wurde in verschiedenen einfachen und modifizierten Alkoholen getestet. Das Ergebnis ist in der folgenden Tabelle zu sehen: "+" bezeichnet die geeigneten Lösemittel, "(+)" steht für nicht vollständig löslich und "-" bezeichnet die nicht geeigneten Lösemittel. Zugrundegelegt wurde eine 2%-ige Lösung des Polymers. Untersucht wurden folgende Lösemittel: Methanol, Ethanol, Butanol, 4-Hydroxy-4-methyl-2-pentanon (HMP), 2,2,3,3-Tetafluorpropanol (TFP) und Tetrahydrofuran (THF).

| | Polymer 1 | Polymer 2 | Polymer 3 | Polymer 4 | Polymer 5 | Polymer 6 |
|---|---|---|---|---|---|---|
| Anteil x [mol%] | 10 | 20 | 30 | 45 | 50 | 100 |
| Anteil y [mol%] | 90 | 80 | 70 | 55 | 50 | 0 |
| Methanol, Ethanol, Butanol | + | - | - | - | - | - |

(fortgesetzt)

| | Polymer 1 | Polymer 2 | Polymer 3 | Polymer 4 | Polymer 5 | Polymer 6 |
|---|---|---|---|---|---|---|
| HMP | + | + | - | - | - | - |
| TFP | + | + | + | + | (+) | - |
| THF | + | + | + | + | + | + |

Überraschenderweise wurde durch den Einbau von DMAA eine deutliche Verbesserung der Löslichkeit in TFP erreicht, siehe Polymer 6 in Vergleich zu den Polymeren 1 bis 5. Für letztere ist TFP ein geeignetes Lösemittel. Diese Polymere enthalten mindestens 50 mol-% bzw. mindestens 18 Gew.-% DMAA.

**Beispiel 2b: nicht erfindungsgemäßes Vergleichsbeispiel**

Beschrieben werden im folgenden Copolymere mit der Struktur:

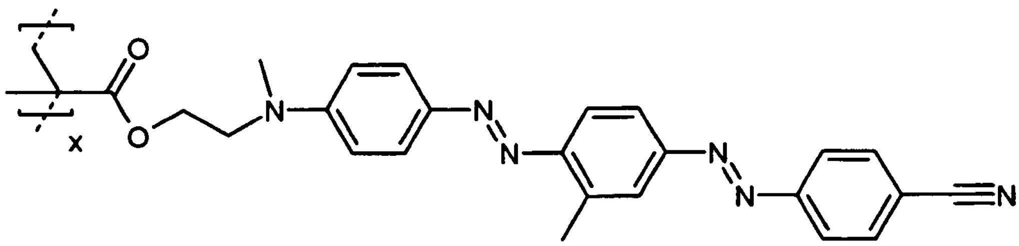

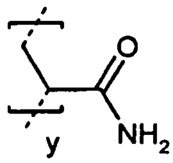

Die Monomereinheit x entspricht dem Polymer 6 (siehe Beispiel 2a). Sie ist zu 20, 30, 40 und 50 mol-% enthalten. Die Polymere werden in dieser Reihenfolge mit Polymer 2b, 3b, 4b, und 5b bezeichnet. Die Monomereinheit y besteht aus Acrylamid.

Analog zu Beispiel 2a wurde die Löslichkeit der Polymere in 2,2,3,3-Tetratluorpropanol (TFP) getestet (20-%ige Lösung). Das Ergebnis ist in folgender Tabelle zusammengestellt:

| | Polymer 2b | Polymer 3b | Polymer 4b | Polymer 5b | Polymer 6 |
|---|---|---|---|---|---|
| Anteil x [mol%] | 20 | 30 | 40 | 50 | 100 |
| Anteil y [mol%] | 80 | 70 | 60 | 50 | 0 |
| TFP | + | - | - | - | - |

Die löslichkeitsverbessernde Wirkung der Monomereinheit y ist gering. Im Polymer müssen mindestens 80 mol-% der Monomereinheit y enthalten sein, damit es sich vollständig in TFP löst. Bei dem erfindungsgemäßen Polymeren (siehe Beispiel 2a) sind aber nur 50 mol-% Dimethylacrylamid (DMAA) für denselben Effekt nötig.

**Beispiel 3: Verbesserung der Löslichkeit durch Verwendung von Farbstoffmolekülen mit Hydroxyethylgruppen**

Es wurden Polymere hergestellt, die Azobenzol-Farbstoffe als Seitenketten enthalten, welche für die erfindungsgemäße löslichkeitsverbessernde Wirkung verantwortlich sind. Die löslichkeitsverbessernden Hydroxyethylgruppen sind an der Bindungsstelle zum Spacer und / oder an der freien Stelle jedes Azobenzol-Farbstoffs angebracht.

Die hergestellten Polymere tragen die laufenden Nummern 7 bis 10:

Polymer 7:

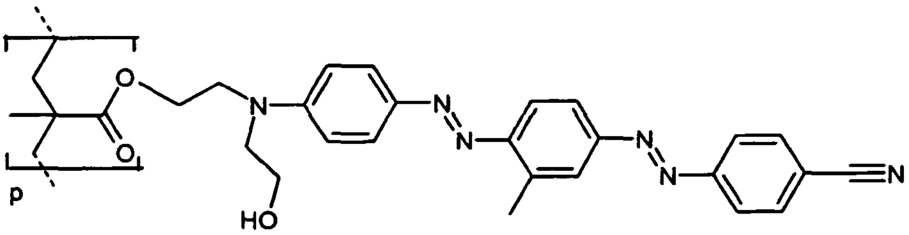

(Monomer aus Beispiel 1.1)

Polymer 8:

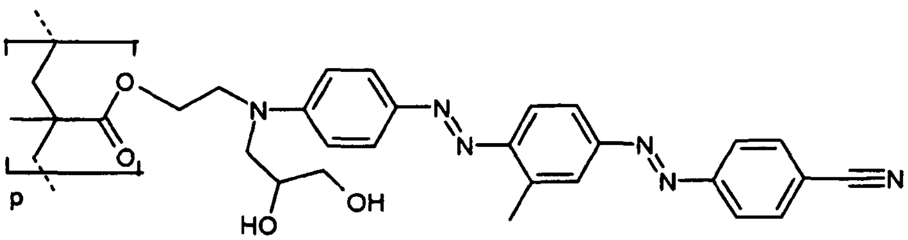

(Monomer aus Beispiel 1.2)

Polymer 9:

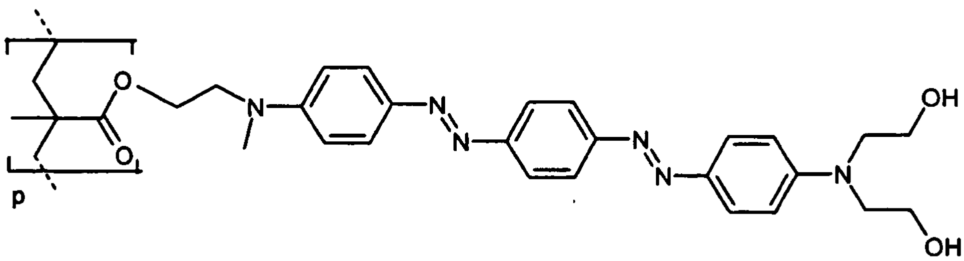

(Monomer aus Beispiel 1.3)

Polymer 10:

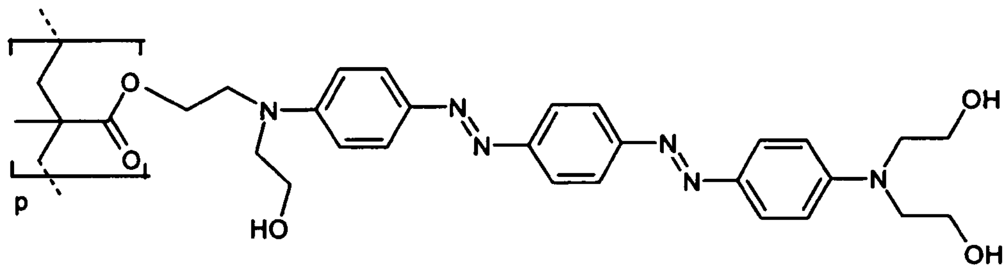

(Monomer aus Beispiel 1.4)

Diese Polymere werden mit Polymer 6 (siehe Beispiel 2) verglichen. Das Ergebnis lautet: Die Polymere 7 bis 10 lassen sich, nicht nur - wie Polymer 6 - in THF, sondern im Gegensatz zu diesem auch in HMP auflösen (2%-ige Konzentration). Je höher der Anteil an OH-Molekülen im Polymer ist, umso stärker sind die Wechselwirkungskräfte mit den Hydroxy-Molekülen des Lösemittels HMP, und umso besser kann HMP als Lösemittel fungieren. Im Einzelnen lautet das Ergebnis: Das Polymer 7 löst sich unvollständig in HMP, die Polymere 8 und 9 fast vollständig und das Polymer 10 sehr gut in HMP.

**Beispiel 4: Höhe der lichtinduzierten Doppelbrechungswerte**

Es wurden mehrere erfindungsgemäße Polymere hergestellt, die als dünner Film hohe lichtinduzierbare Doppelbrechungswerte zeigen. Die erfindungsgemäßen Polymere 1 bis 5 (siehe Beispiel 2) und 7 bis 10 (siehe Beispiel 3) wurden in Belichtungsexperimenten untersucht. Gemessen wurde die Höhe der lichtinduzierten Doppelbrechungswerte ursprünglich isotroper Polymerfilme.

Beschreibung der Filmpräparation:

Ein 1 mm dickes Glassubstrat wird mit einem dünnen Polymerfilm versehen. Dies geschieht mit Hilfe der Drehschleudertechnik ("spin coating"). Dabei wird das Polymer bei einer typischen Konzentration von 20 bis 75 g/l in einem geeigneten Alkohol gelöst und die Polymerlösung auf das sich mit einer Umdrehungszahl von 2000 $min^{-1}$ drehende Substrat aufgetropft. Der entstandene Polymerfilm hat typischerweise eine Dicke von 200 nm. Durch die Lagerung des beschichteten Glasträgers für 2 h bei 60°C im Vakuumofen werden Reste des Lösungsmittels aus dem Film entfernt.

Beschreibung des Belichtungsexperiments:

Jede so präparierte Probe wird von der Polymerseite mit polarisiertem Laserlicht in senkrechter Inzidenz bestrahlt (Schreibvorgang). Als Lichtquelle dient ein ArgonIonen-Laser (Firma Continuum) bei der Wellenlänge 514 nm. Die Intensität dieses sog. Schreiblasers beträgt 100 $mW/cm^2$. In den Azobenzol-Seitengruppenmolekülen des Polymers werden *trans-cis-trans*-Isomerisierungszyklen induziert, was zu einer Nettoorientierung der Seitengruppen weg von der Polarisationsrichtung des Lasers führt. Diese Moleküldynamik zeigt sich makroskopisch in einer Doppelbrechung $\Delta n$ in der Polymerfilmebene. Die Dynamik läuft bei den gegebenen Belichtungsparametern im Minutenbereich ab.

Experimentell wird der zeitliche Verlauf der induzierten Doppelbrechung bei einer Wellenlänge von 633 nm mit einem Helium-Neon-Laser (typische Intensität: 10 $mW/cm^2$) ausgelesen. Das auf die Polymerschicht einfallende Licht dieses sog. Leselasers nimmt einen festen Winkel von 15° zur Normalen der Schicht ein. Leseund Schreiblicht überlappen auf der Polymerschicht. Die Polarisationsrichtung des Leselichts nimmt in der Polymerfilmebene einen Winkel von 45° zur Polarisation des Schreiblichts ein. Sie wird beim Durchlaufen der Polymerschicht gedreht, sofern die Schicht doppelbrechend ist. Diese Drehung geht einher mit einem Anwachsen der Leselichtintensität $I_s$ nach einem Analysator, der nach der Probe im Strahlengang steht und Licht senkrecht zur ursprünglichen Polarisationsrichtung durchlässt . In gleichem Maß, wie $I_s$ ansteigt, nimmt die Intensität $I_p$ ab. $I_p$ ist definiert als die transmittierte Intensität nach einem ebenso positionierten Analysator, der aber die ursprüngliche Polarisationsrichtung des Leselasers selektiert. Experimentell werden die beiden Anteile der Polarisationsrichtung parallel und senkrecht zur ursprünglichen Richtung über einen polarisierenden Strahlteiler getrennt und mit Hilfe zweier Si-Photodioden detektiert. Die Doppelbrechung $\Delta n$ errechnet sich über folgende Relation aus den gemessenen Intensitäten:

$$\Delta n = \frac{\lambda}{\pi d} \arcsin \sqrt{\frac{I_s}{I_s + I_p}}$$

wobei d die Dicke der Polymerschicht und $\lambda$ = 633 nm die Lichtwellenlänge des Leselasers bezeichnet. In dieser Formel wird näherungsweise angenommen, dass senkrecht zur Polymerschicht ausgelesen wird.

Die Polymere erreichen folgende Doppelbrechungswerte:

Polymer 1: $\Delta$n = 0,06; Polymer 2: $\Delta$n = 0,11; Polymer 3: $\Delta$n = 0,17; Polymer 4: $\Delta$n = 0,20; Polymer 5: $\Delta$n = 0,21; Polymer 6: $\Delta$n = 0,44; Polymer 7: $\Delta$n = 0,39; Polymer 8: $\Delta$n = 0,10; Polymer 9: $\Delta$n = 0,23; Polymer 10: $\Delta$n = 0,12.

**Beispiel 5: Verbesserung der Reversibilität der lichtinduzierten Moleküldynamik durch Einbau von Dimethylacrylamid**

Filme der in Beispiel 2a beschriebenen erfindungsgemäßen Polymere 1 bis 5 wurden nach der Vorschrift aus Beispiel 4 hergestellt, über eine Dauer von 10 min belichtet und der Doppelbrechungsaufbau mit einem Leselaser abgefragt. Die Doppelbrechung $\Delta$n erreicht innerhalb der Belichtungsdauer ihren Maximalwert und verharrt bei diesem Wert. $\Delta$n wird anschließend durch Drehen der Polarisationsrichtung des Schreiblichts um 90° gelöscht. Dieser Löschvorgang ist abgeschlossen, sobald gilt: $\Delta$n = 0. Vier weitere Schreib-/ Löschvorgänge werden nach gleichem Muster direkt an diesen ersten angeschlossen. Das Ergebnis lautet: Der zeitliche Kurvenverlauf $\Delta$n(t) bleibt für jeden Zyklus nahezu unverändert. Die maximal erreichbaren Doppelbrechungswerte sind für jeden Zyklus identisch (zugestandene Toleranz: 5 %). Das Verhalten der Polymere 1 bis 5 kann bei diesen Schreib-/Löschzyklen in guter Näherung als reversibel eingestuft werden.

Figur 1 zeigt exemplarisch die Doppelbrechungskurve des Polymers 4 während der fünf Schreib-/Löschzyklen.

Das vergleichbare Experiment wurde zuvor bereits mit dem Polymer 6 durchgeführt, das nicht die erfindungsgemäße löslichkeitsverbessernde Monomereinheit besitzt. Da die Doppelbrechung $\Delta$n nach 10 minütiger Belichtung noch nicht ihr Maximum erreicht hatte, wurde die Belichtungsdauer der fünf Schreibvorgänge auf 30 min verlängert. Es ist zu beobachten, dass sich die Form der Doppelbrechungskurven mit jedem neuen Zyklus verändert. Insbesondere nimmt der maximal erreichte Doppelbrechungswert mit steigender Zykluszahl ab. Nach Ende des fünften Schreibvorgangs beträgt die Doppelbrechung nur noch 33 % des im ersten Schreibvorgang erreichten Werts (siehe auch untenstehende Tabelle).

Figur 2 zeigt die Doppelbrechungskurve des Polymers 6 während der fünf Schreib-/Löschzyklen.

Um sicherzustellen, dass die im Vergleich zu den Polymeren 1 bis 5 längere Belichtungszeit das Ergebnis nicht qualitativ verfälscht, wurden Schreib-/Löschzyklen am Polymer 6 mit nur je 100 s Schreibzeit durchgeführt. Die Doppelbrechungskurven erreichen bei dieser kurzen Schreibzeit ihren Maximalwert nicht. Das Ergebnis lautet: Auch diese Zyklen laufen nicht reversibel ab, d.h. der nach 100 s erreichte Wert liegt nach dem fünften Zyklus bei 71 % des im ersten Zyklus erreichten Werts.

Figur 3 zeigt die zu diesem Experimente gehörende Doppelbrechungskurve.

Zusammenfassung der Ergebnisse.

| | Polymer 1 | Polymer 2 | Polymer 3 | Polymer 4 | Polymer 5 | Polymer 6 |
|---|---|---|---|---|---|---|
| Anteil x [mol%] | 10 | 20 | 30 | 45 | 50 | 100 |
| Anteil y [mol%] | 90 | 80 | 70 | 55 | 50 | 0 |
| Doppelbrechungswert nach 5 Zyklen [%] * | 100 | 100 | 100 | 100 | 100 | 33/71** |
| * Wert relativ zum Doppelbrechungswert des ersten Zyklus<br>** 1800 s / 100 s Schreibzeit | | | | | | |

Durch den Einbau von Dimethylacrylamid-Monomereinheiten zu mindestens 50 mol-% (siehe Anteil y in obiger Tabelle) wurde nicht nur die Löslichkeit des Polymers in TFP erreicht, sondern auch die Reversibilität der Belichtungsdynamik deutlich verbessert. Reversibles Schreiben und Löschen von Doppelbrechungswerten ist eine Grundvoraussetzung für den Einsatz eines photoadressierbaren Polymers als Funktionsschicht in einem wiederbeschreibbaren Datenspeicher.

**Beispiel 6: Eignung der Polymere für blaue Schreiblaser**

Am Beispiel des Polymers 4 wird verdeutlicht, dass nicht nur ein grüner Schreiblaser (Beispiele 4 und 5), sondern z.B. auch ein blauer Schreiblaser in Frage kommt. Eine Laserbelichtung wurde nach dem in Beispiel 4 geschilderten Prinzip vorgenommen. Der Schreiblaser hatte eine Lichtwellenlänge von 407 nm und eine Intensität von 100 $mW/cm^2$. Das Ergebnis lautet: Es konnte ebenfalls ein maximaler Doppelbrechungswert von $\Delta n = 0{,}2$ induziert werden (Messfehler ca. 10 %).

## Patentansprüche

**1.** Ein polymeres oder oligomeres organisches amorphes Material aus Hauptketten und Seitenketten, wobei die Hauptkette der folgenden Grundstrukturen entstammen: Polyacrylat, Polymethacrylat, Polyacrylamid, Polymethacrylamid, Polysiloxan, Polyharnstoff, Polyurethan, Polyester, Polystyrol oder Zellulose und die Seitenketten

a) mindestens einen Azobenzolfarbstoff,
b) mindestens eine formanisotrope Gruppierung der Formel (III)

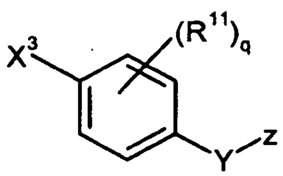

(III),

worin Z für einen Rest der Formeln

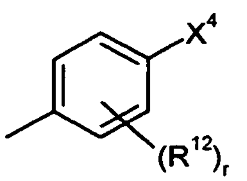

(IIIa)

oder

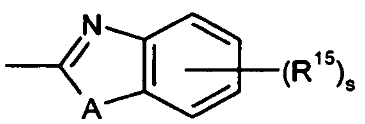

(IIIb)

steht, worin
A für O, S oder N-$C_1$- bis $C_4$-Alkyl steht,
$X^3$ für eine Spacergruppe der Formel -$X^{3'}$-$(Q^2)_j$-$T^2$-$S^2$- steht,
$X^4$ für $X^{4'}$-$R^{13}$ steht,
$X^{3'}$ und $X^{4'}$ unabhängig voneinander für eine direkte Bindung, -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, - (C=N$R^8$)- oder -(CN$R^8$-N$R^5$)- stehen,
$R^5$, $R^8$ und $R^{13}$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_3$-bis $C_{10}$-Cycloalkyl-(C=O)-, $C_2$- bis $C_{20}$-Alkenyl-(C=O)-, $C_6$- bis $C_{10}$-Aryl-(C=O)-, $C_1$-bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen oder
$X^{4'}$-$R^{13}$ für Wasserstoff, Halogen, Cyan, Nitro, $CF_3$ oder $CCl_3$ stehen kann,

$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl stehen,

Y für eine einfache Bindung, -COO-, OCO-, -CONH-, -NHCO-, -CON($CH_3$)-, -N($CH_3$)CO-, -O-, -NH- oder -N($CH_3$)- steht,

$R^{11}$, $R^{12}$, $R^{15}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$-bis $C_{10}$-Aryl-NH-(C=O)- stehen,

q, r und s unabhängig voneinander für eine ganze Zahl von 0 bis 4, vorzugsweise 0 bis 2 stehen,

$Q^2$ für -O-, -S-, -(N-$R^5$)-, -C($R^6R^7$)-, -(C=O)-, -(CO-O)-, -(CO-N$R^5$)-, -($SO_2$)-, -($SO_2$-O)-, -($SO_2$-N$R^5$)-, -(C=N$R^8$)-, -(CN$R^8$-N$R^5$)-, -$(CH_2)_p$-, p- oder m-$C_6H_4$- oder einen zweibindigen Rest der Formeln

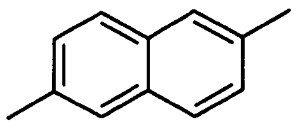

oder

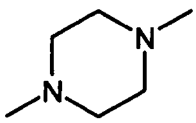

steht,

j für eine ganze Zahl von 0 bis 4 steht, wobei für j > 1 die einzelnen $Q^1$ verschiedene Bedeutungen haben können,

$T^2$ für -$(CH_2)_p$- steht, wobei die Kette durch -O-, -N$R^9$-, oder -OSi$R^{10}{}_2$O- unterbrochen sein kann,

$S^2$ für eine direkte Bindung, -O-, -S- oder -N$R^9$- steht,

p für eine ganze Zahl von 2 bis 12, vorzugsweise 2 bis 8, insbesondere 2 bis 4 steht,

$R^9$ für Wasserstoff, Methyl, Ethyl oder Propyl steht und

$R^{10}$ für Methyl oder Ethyl steht und

c) mindestens ein Monomer ausgewählt aus

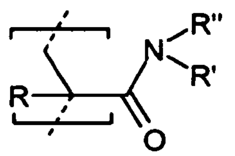

(VI),

wobei

R' und R" entweder unabhängig voneinander $C_nH_{2n+1}$ oder $C_nH_{2n}$-OH bedeuten, mit n = 1 bis 10, bevorzugt n = 1 bis 3, oder gemeinsam eine - $C_nH_{2n}$-Brücke mit n = 2 bis 6, bevorzugt n = 4 bis 5, eine - $(C_2H_4\text{-}O)_n$-$C_2H_4$-Brücke , mit n = 1 bis 5, bevorzugt n = 1 bis 3, eine - $C_2H_4$- N($C_nH_{2n+1}$)- $C_2H_4$-Brücke , mit n = 1 bis 6, bevorzugt n = 1 bis 3 und R für Wasserstoff oder Methyl steht,

wobei Gruppe c) als Monomerbaustein in der Hauptkette enthalten ist.

2. Material gemäß Anspruch 1, wobei die Hauptkette den Grundstrukturen Polyacrylat, Polymethacrylat oder Polyacrylamid entstammt.

3. Material gemäß Anspruch 1, wobei die Gruppen a) und/oder b) Hydroxyethylgruppen tragen und die Gruppe c) enthalten sein kann.

4. Material gemäß Anspruch 1, **dadurch gekennzeichnet, dass** die Farbstoffe und die formanisotropen Gruppen über flexible Spacer an die Polymerkette kovalent angebunden sind.

**5.** Material gemäß Anspruch 1, 2, 3 oder 4, **dadurch gekennzeichnet, dass** Azobenzol-farbstoffe der solche folgenden Formel (I) sind:

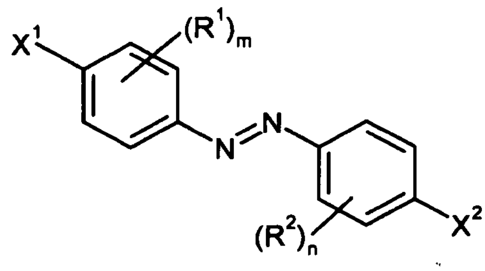

(I),

worin

$R^1$ und $R^2$ unabhängig voneinander für Wasserstoff oder einen nichtionischen Substituenten stehen und m und n unabhängig voneinander für eine ganze Zahl von 0 bis 4, vorzugsweise 0 bis 2 stehen.
$X^1$ und $X^2$ bedeuten $-X^{1'}-R^3$ bzw. $X^{2'}-R^4$,

worin

$X^{1'}$ und $X^{2'}$ für eine direkte Bindung, -O-, -S-, $-(N-R^5)-$, $-C(R^6R^7)-$, -(C=O)-, -(CO- O)-, $-(CO-NR^5)-$, $-(SO_2)-$, $-(SO_2-O)-$, $-(SO_2-NR^5)-$, $-(C=NR^8)-$ oder $-(CNR^8- NR^5)-$ stehen,
$R^3$, $R^4$, $R^5$ und $R^8$ unabhängig voneinander für Wasserstoff, $C_1$- bis $C_{20}$-Alkyl, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl- (C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-$(SO_2)$-, $C_3$- bis $C_{10}$-Cycloalkyl-$(SO_2)$-, $C_2$- bis $C_{20}$-Alkenyl-$(SO_2)$- oder $C_6$- bis $C_{10}$-Aryl-$(SO_2)$- stehen oder
$X^{1'}-R^3$ und $X^{2'}-R^4$ für Wasserstoff, Halogen, Cyan, Nitro, $CF_3$ oder $CCl_3$ stehen können,
$R^6$ und $R^7$ unabhängig voneinander für Wasserstoff, Halogen, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$- Aryl stehen.

**6.** Material gemäß Anspruch 5, **dadurch gekennzeichnet, dass** $R^5$ in Formel (I) für $C_2$- bis $C_{10}$-Alkyl-OH steht.

**7.** Material gemäß einem oder mehreren der vorangegangenen Ansprüche, **dadurch gekennzeichnet, dass** bei der Herstellung mindestens ein Monomer der Formel (II) verwendet wurde:

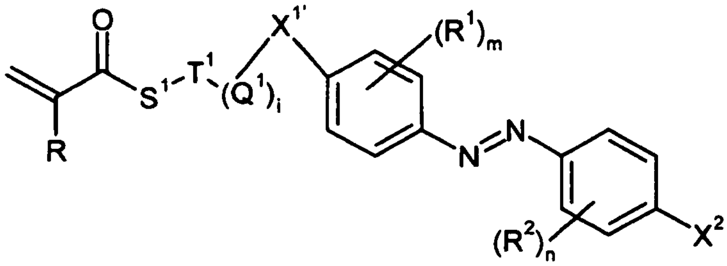

(II),

worin

R für Wasserstoff oder Methyl steht und
$X^{1'}$ für eine direkte Bindung, -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$ oder $-(CNR^8-NR^5)-$ stehen,
$Q^1$ für -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^8)-$, $-(CNR^8-NR^5)-$, $-(CH_2)_p-$, p- oder m-$C_6H_4$- oder einen zweibindigen Rest der Formeln

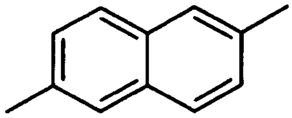

oder

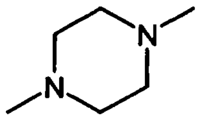

steht,

i für eine ganze Zahl von 0 bis 4 steht, wobei für i > 1 die einzelnen $Q^1$ verschiedene Bedeutungen haben können,

$T^1$ für $-(CH_2)_p-$ steht, wobei die Kette durch -O-, $-NR^9-$, oder $-OSiR^{10}{}_2O-$ unterbrochen sein kann,

$s^1$ für eine direkte Bindung, -O-, -S- oder $-NR^9-$ steht,

$R^1$ und $R^2$ unabhängig voneinander für Wasserstoff oder Halogen, Cyano, Nitro, $C_1$-bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl oder $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)- steht,

n und m für eine ganze Zahl von o bis 4 steht und

$X^2$ für CN oder Nitro steht.

8. Material gemäß einem oder mehreren der vorangegangenen Ansprüche, **dadurch gekennzeichnet, dass** bei der Herstellung mindestens ein Monomer der Formeln (X) bis (XIII) verwendet wird:

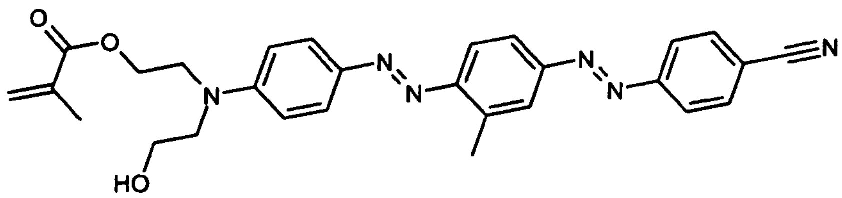

(X)

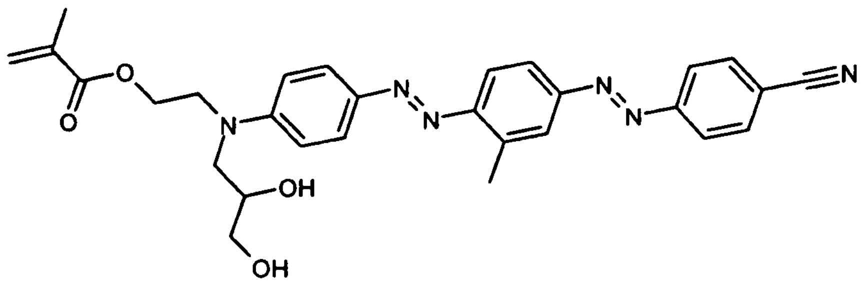

(XI)

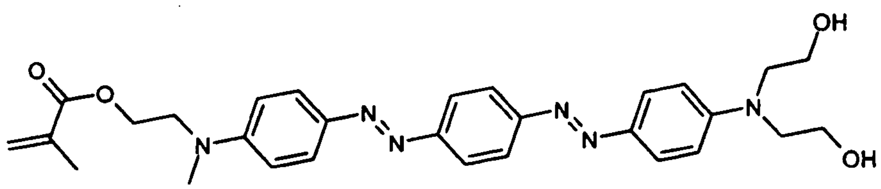

(XII)

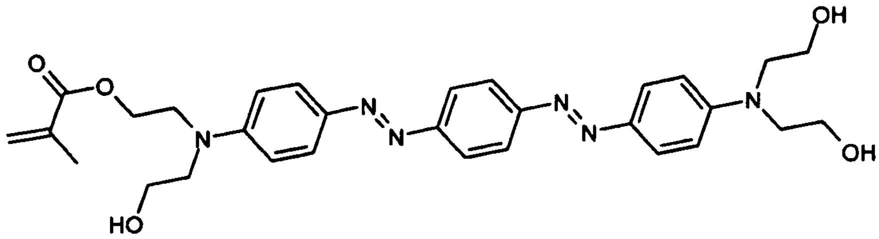

(XIII)

**9.** Aufzeichnungsmaterial, erhältlich aus Material gemäß einem oder mehrerer der vorangegangenen Ansprüche.

**10.** Verwendung des Aufzeichnungsmaterials gemäß Anspruch 9 in der optischen Datenspeicherung.

**11.** Datenspeicher, erhältlich aus Aufzeichnungsmaterial gemäß den Ansprüchen 9 und/oder 10.

## Claims

**1.** A polymeric or oligomeric organic amorphous material comprising main chains and side chains, wherein the main chain is derived from the following basic structures: polyacrylate, polymethacrylate, polyacrylamide, polymethacrylamide, polysiloxane, polyurea, polyurethane, polyester, polystyrene or cellulose and the side chains are derived from

a) at least one azobenzene dye,
b) at least one shape-anisotropic group of the formula (III)

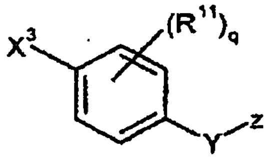

(III),

where Z is a radical of the formula

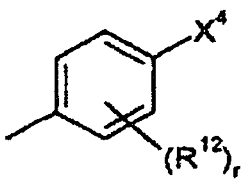

(IIIa)

or

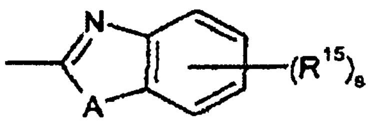

(IIIb),

where

A is O, S or N-$C_1$-$C_4$-alkyl,
$X^3$ is a spacer group of the formula -$X^{3'}$-$(Q^2)_j$-$T^2$-$S^2$- ,
$X^4$ is $X^{4'}$- $R^{13}$,
$X^{3'}$ and $X^{4'}$ are each, independently of one another, a direct bond, -O-, -S-, -(N-$R^5$)-, -C($R^6R^7$) -, -(C=O)-, -(CO-O)-, - (CO-$NR^5$)-, -($SO_2$)-, -($SO_2$-O)-, -($SO_2$-$NR^5$)-, -(C=$NR^8$)- or -($CNR^8$-$NR^5$)-,
$R^5$, $R^8$ and $R^{13}$ are each, independently of one another, hydrogen, $C_1$-$C_{20}$-alkyl, $C_3$-$C_{10}$-cycloalkyl, $C_2$-$C_{20}$-alkenyl, $C_6$-$C_{10}$-aryl, $C_1$-$C_{20}$-alkyl-(C=O)-, $C_3$-$C_{10}$-cycloalkyl-(C=O)-, $C_2$-$C_{20}$-alkenyl-(C=O)-, $C_6$-$C_{10}$-aryl-(C=O)-, $C_1$-$C_{20}$-alkyl-($SO_2$)-, $C_3$-$C_{10}$-cycloalkyl-($SO_2$)-, $C_2$-$C_{20}$-alkenyl-($SO_2$)- or $C_6$-$C_{10}$-aryl-($SO_2$)- or
$X^{4'}$-$R^{13}$ can be hydrogen, halogen, cyano, nitro, $CF_3$ or $CCl_3$,
$R^6$ and $R^7$ are each, independently of one another, hydrogen, halogen, $C_1$-$C_{20}$-alkyl, $C_1$-$C_{20}$-alkoxy, $C_3$-$C_{10}$-cycloalkyl, $C_2$-$C_{20}$-alkenyl or $C_6$-$C_{10}$-aryl,
Y is a single bond, -COO-, OCO-, -CONH-, -NHCO-, -CON($CH_3$)-, -N($CH_3$)CO-, -O-, -NH- or -N($CH_3$)-,
$R^{11}$, $R^{12}$, $R^{15}$ are each, independently of one another, hydrogen, halogen, cyano, nitro, $C_1$-$C_{20}$-alkyl, $C_1$-$C_{20}$-alkoxy, phenoxy, $C_3$-$C_{10}$-cycloalkyl, $C_2$-$C_{20}$-alkenyl or $C_6$-$C_{10}$-aryl, $C_1$-$C_{20}$-alkyl-(C=O)-, $C_6$-$C_{10}$-aryl-(C=O)-, $C_1$-$C_{20}$-alkyl-($SO_2$)-, $C_1$-$C_{20}$-alkyl-(C=O)-O-, $C_1$-$C_{20}$-alkyl-(C=O)-NH-, $C_6$-$C_{10}$-aryl-(C=O)-NH-, $C_1$-$C_{20}$-alkyl-O-(C=O)-, $C_1$-$C_{20}$-alkyl-NH-(C=O)- or $C_6$-$C_{10}$-aryl-NH-(C=O)-,
q, r and s are each, independently of one another, an integer from 0 to 4, preferably from 0 to 2,
$Q^2$ is -O-, -S-, - -(N-$R^5$)- , -C($R^6R^7$) -, - (C=O) -, - (CO-O) -, - (CO-$NR^5$) -, - ($SO_2$)-, -($SO_2$-O)-, - - ($SO_2$-$NR^5$) -, - (C=$NR^8$) -, - ($CNR^8$-$NR^5$)-, -$(CH_2)_p$-, p- or m-$C_6H_4$- or a divalent radical of the formula

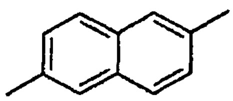
or
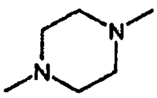
,

j is an integer from 0 to 4, where when j > 1 the individual radicals $Q^1$ can have different meanings,
$T^2$ is -$(CH_2)_p$-, where the chain can be interrupted by -O- , -$NR^9$- or -$OSiR^{10}{}_2O$- ,
$S^2$ is a direct bond, -O-, -S- or -$NR^9$-,
p is an integer from 2 to 12, preferably from 2 to 8, in particular from 2 to 4,
$R^9$ is hydrogen, methyl, ethyl or propyl and
$R^{10}$ is methyl or ethyl and

c) at least one monomer selected from among

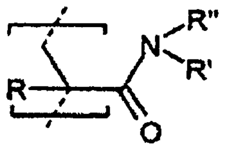
(VI)

where

R' and R'' are either each, independently of one another, $C_nH_{2n+1}$ or $C_nH_{2n}$-OH, where n = 1 to 10, preferably n = 1 to 3, or together form a -$C_nH_{2n}$- bridge where n = 2 to 6, preferably n = 4 to 5, a -$(C_2H_4\text{-}O)_n$-$C_2H_4$- bridge, where n = 1 to 5, preferably n = 1 to 3, a -$C_2H_4$-N($C_nH_{2n+1}$)-$C_2H_4$ bridge, where n = 1 to 6, preferably n = 1 to 3, and R is hydrogen or methyl,

where group c) is present as monomer building block in the main chain.

**2.** Material according to Claim 1, wherein the main chain is derived from the basic structures polyacrylate, polymethacrylate or polyacrylamide.

**3.** Material according to Claim 1, wherein the groups a) and/or b) bear hydroxyethyl groups and the group c) can be

present.

4. Material according to Claim 1, **characterized in that** the dyes and the shape-anisotropic groups are covalently bound via flexible spacers to the polymer chain.

5. Material according to Claim 1, 2, 3 or 4, **characterized in that** azobenzene dyes are dyes of the formula (I):

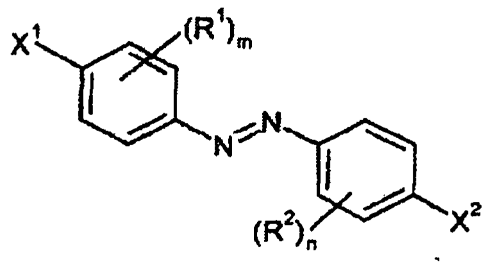

(I)

where

$R^1$ and $R^2$ are each, independently of one another, hydrogen or a nonionic substituent and
m and n are each, independently of one another, an integer from 0 to 4, preferably from 0 to 2,
$X^1$ and $X^2$ are each $-X^{1'}-R^3$ or $X^{2'}-R^4$,

where

$X^{1'}$ and $X^{2'}$ are each a direct bond, -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, $-(C=NR^5)-$ or $-(CNR_8-NR^5)-$,
$R^3$, $R^4$, $R^5$ and $R^8$ are each, independently of one another, hydrogen, $C_1$-$C_{20}$-alkyl, $C_3$-$C_{10}$-cycloalkyl, $C_2$-$C_{20}$-alkenyl, $C_6$-$C_{10}$-aryl, $C_1$-$C_{20}$-alkyl- (C=O) -, $C_3$-$C_{10}$-cycloalkyl-(C=O) -, $C_2$-$C_{20}$-alkenyl- (C=O) -, $C_6$-$C_{10}$-aryl- (C=O) -, $C_1$-$C_{20}$-alkyl- $(SO_2)$ -, $C_3$-$C_{10}$-cycloalkyl-$(SO_2)$-, $C_2$-$C_{20}$-alkenyl-$(SO_2)$ - or $C_6$-$C_{10}$-aryl-$(SO_2)$ - or
$X^{1'}-R^3$ and $X^{2'}-R^4$ can each be hydrogen, halogen, cyano, nitro, $CF_3$ or $CCl_3$,
$R^6$ and $R^7$ are each, independently of one another, hydrogen, halogen, $C_1$-$C_{20}$-alkyl, $C_1$-$C_{20}$-alkoxy, $C_3$-$C_{10}$-cycloalkyl, $C_2$-$C_{20}$-alkenyl or $C_6$-$C_{10}$-aryl.

6. Material according to Claim 5, **characterized in that** $R^5$ in formula (I) is $C_2$-$C_{10}$-alkyl-OH.

7. Material according to one or more of the preceding claims, **characterized in that** the preparation was carried out using at least one monomer of the formula (II):

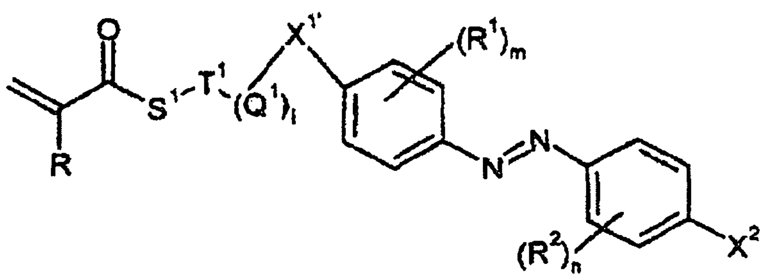

(II)

where

R is hydrogen or methyl and
$X^{1'}$ is a direct bond, -O-, -S-, $-(N-R^5)-$ , $-C(R^6R^7)$ -, -(C=O)-, - (CO-O) -, - $(CO-NR^5)$-, - $(SO_2)$-, - $(SO_2-O)$-, $-(SO_2-NR^5)-$, - $(C=NR^8)$- or $-(CNR^8-NR^5)-$,

$Q^1$ is -O-, -S-, -(N-$R^5$)-, -C($R^6R^7$)-, -(C=O)-, -(CO-O)-, - (CO-$NR^5$) -, - ($SO_2$)- , - ($SO_2$-O) -, - ($SO_2$-$NR^5$)-, -(C=$NR^8$)-, -(C$NR^8$-$NR^5$)-, -$(CH_2)_p$-, p- or m-$C_6H_4$- or a divalent radical of the formula

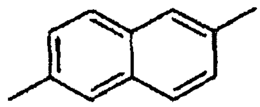

or

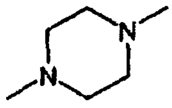

,

i is an integer from 0 to 4, where when i > 1 the individual radicals $Q^1$ can have different meanings,
$T^1$ is -$(CH_2)_p$-, where the chain can be interrupted by -O- -$NR^9$- or -$OSiR^{10}{}_2O$-,
$S^1$ is a direct bond, -O-, -S- or -$NR^9$-,
$R^1$ and $R^2$ are each, independently of one another, hydrogen or halogen, cyano, nitro, $C_1$-$C_{20}$-alkyl, $C_1$-$C_{20}$-alkoxy, phenoxy, $C_3$-$C_{10}$-cycloalkyl, $C_2$-$C_{20}$-alkenyl or $C_6$-$C_{10}$-aryl, $C_1$-$C_{20}$-alkyl- (C=O) -, $C_6$-$C_{10}$-aryl-(C=O) -, $C_1$-$C_{20}$-alkyl-($SO_2$)-, $C_1$-$C_{20}$-alkyl- (C=O) -O-, $C_1$-$C_{20}$-alkyl- (C=O)-NH-, $C_6$-$C_{10}$-aryl-(C=O)-NH-, $C_1$-$C_{20}$-alkyl-O-(C=O)-, $C_1$-$C_{20}$-alkyl-NH-(C=O)- or $C_6$-$C_{10}$-aryl-NH-(C=O)-,
n and m are each an integer from 0 to 4 and
$X^2$ is CN or nitro.

8. Material according to one or more of the preceding claims, **characterized in that** the preparation is carried out using at least one monomer of the formulae (X) to (XIII):

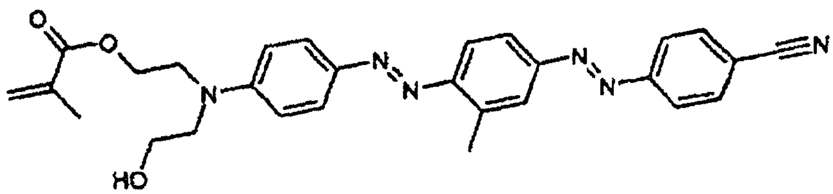

(X)

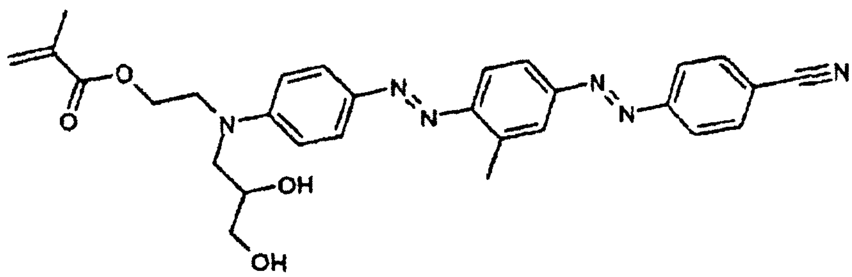

(XI)

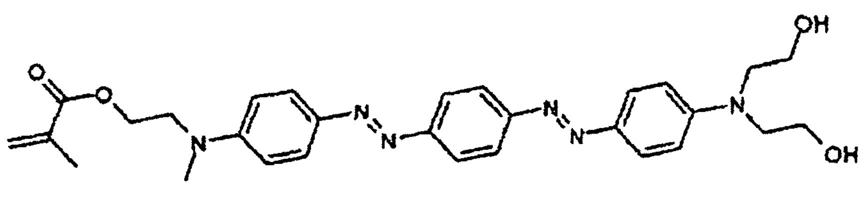

(XII)

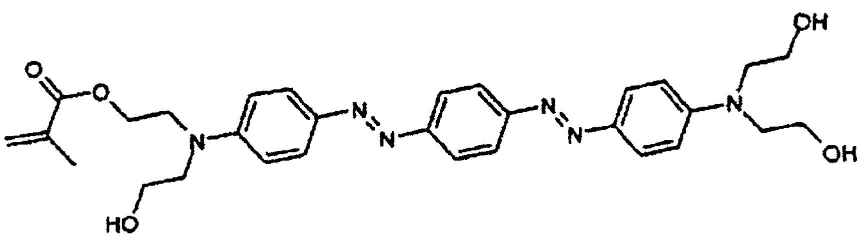

(XIII)

9. Recording material which can be obtained from material according to one or more of the preceding claims.

10. Use of the recording material according to Claim 9 in optical data storage.

11. Datastore which can be obtained from recording material according to Claims 9 and/or 10.

**Revendications**

1. Matériau amorphe organique polymère ou oligomère constitué par des chaînes principales et des chaînes latérales, où les chaînes principales proviennent des structures de base suivantes: polyacrylate, polyméthacrylate, polyacrylamide, polyméthacrylamide, polysiloxane, polyurée, polyuréthane, polyester, polystyrène ou cellulose et les chaînes latérales contiennent

a) au moins un colorant de type azobenzène,
b) au moins un groupement à anisotropie de forme de formule (III)

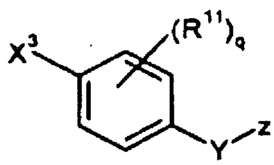

(III),

où Z représente un radical des formules

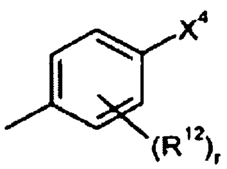

(IIIa)

ou

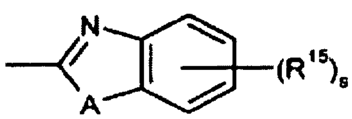

(IIIb),

où

A représente O, S ou N-$C_1$-$C_4$-alkyle,
$X^3$ représente un groupe écarteur de formule -$X^{3'}$-$(Q^2)_j$ - $T^2$-$S^2$- ,
$X^4$ représente $X^{4'}$-$R^{13}$,
$X^{3'}$ et $X^{4'}$ représentent, indépendamment l'un de l'autre, une liaison directe, -O-, -S-, -(N-$R^5$)-, -C($R^6R^7$)-, -(C=O)-, -(CO-O)-, -(CO-$NR^5$)-, -($SO_2$)-, - ($SO_2$-O)- , -($SO_2$-$NR^5$)-, - (C=$NR^8$) - ou - (C$NR^8$-$NR^5$) -,
$R^5$, $R^8$ et $R^{13}$ représentent, indépendamment l'un de l'autre, hydrogène, $C_1$-$C_{20}$-alkyle, $C_3$-$C_{10}$- cycloalkyle, $C_2$-$C_{20}$-alcényle, $C_6$-$C_{10}$-aryle, $C_1$-$C_{20}$- alkyl-(C=O)-, $C_3$-$C_{10}$-cycloalkyl-(C=O)-, $C_2$-$C_{20}$- alcényl-(C=O)-, $C_6$-$C_{10}$-aryl-(C=O)-, $C_1$-$C_{20}$-alkyl- ($SO_2$)-, $C_3$-$C_{10}$-cycloalkyl-($SO_2$)-, $C_2$-$C_{20}$-alcényl- ($SO_2$) - ou $C_6$-$C_{10}$-aryl-($SO_2$)- ou
$X^{4'}$-$R^{13}$ peut représenter hydrogène, halogène, cyano, nitro, $CF_3$ ou $CCl_3$,
$R^6$ et $R^7$ représentent, indépendamment l'un de l'autre hydrogène, halogène, $C_1$-$C_{20}$-alkyle, $C_1$-$C_{20}$-alcoxy, $C_3$-$C_{10}$-cycloalkyle, $C_2$-$C_{20}$-alcényle ou $C_6$-$C_{10}$-aryle,
Y représente une simple liaison, -COO-, OCO-, -CONH-, -NHCO-, -CON($CH_3$)-, -N($CH_3$)CO-, -O-, -NH- ou -N ($CH_3$)-,
$R^{11}$, $R^{12}$, $R^{15}$ représentent, indépendamment l'un de l'autre, hydrogène, halogène, cyano, nitro, $C_1$-$C_{20}$- alkyle, $C_1$-$C_{20}$-alcoxy, phénoxy, $C_3$-$C_{10}$-cycloalkyle, $C_2$-$C_{20}$-alcényle ou $C_6$-$C_{10}$-aryle, $C_1$-$C_{20}$-alkyl-(C=O)-, $C_6$-$C_{10}$-aryl-(C=O)-, $C_1$-$C_{20}$-alkyl-($SO_2$)-, $C_1$-$C_{20}$-alkyl- (C=O)-O-, $C_1$-$C_{20}$-alkyl-(C=O)-NH-, $C_6$-$C_{10}$-aryl-(C=O)-NH-, $C_1$-$C_{20}$-alkyl-O-(C=O)-, $C_1$-$C_{20}$-alkyl-NH-(C=O) - ou $C_6$-$C_{10}$-aryl-NH-(C=O)-,
q, r et s valent, indépendamment l'un de l'autre, un nombre entier de 0 à 4, de préférence de 0 à 2,
$Q^2$ représente -O-, -S-, - (N-$R^5$)-, -C($R^6R^7$)-, -(C=O)-, -(CO-O)-, -(CO-$NR^5$)-, -($SO_2$)-, -($SO_2$-O)-, -($SO_2$- $NR^5$)-, -(C=$NR^8$)-, -(C$NR^8$-$NR^5$)-, -$(CH_2)_p$-, p-$C_6H_4$- ou m-$C_6H_4$- ou un radical divalent des formules

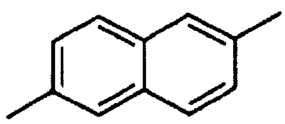
ou
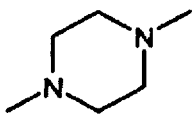

j vaut un nombre entier de 0 à 4, où, pour j > 1, les différents radicaux $Q^1$ peuvent présenter des significations différentes,
$T^2$ représente - $(CH_2)_p$-, où la chaîne peut être interrompue par -O-, -$NR^9$-, ou -OSi$R^{10}{}_2$O-,
$S^2$ représente une liaison directe, -O-, -S- ou -$NR^9$-,
p vaut un nombre entier de 2 à 12, de préférence de 2 à 8, en particulier de 2 à 4,
$R^9$ représente hydrogène, méthyle, éthyle ou propyle et
$R^{10}$ représente méthyle ou éthyle et

c) au moins un monomère choisi parmi

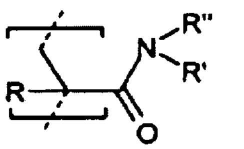
(VI),

où

R' et R" signifient soit indépendamment l'un de l'autre $C_nH_{2n+1}$ ou $C_nH_{2n}$-OH, avec n = 1 à 10, de préférence n = 1 à 3, soit ensemble un pont -$C_nH_{2n}$- avec n = 2 à 6, de préférence n = 4 à 5, un pont -$(C_2H_4\text{-}O)_n$-$C_2H_4$-, avec n = 1 à 5, de préférence n = 1 à 3, un pont - $C_2H_4$-N($C_nH_{2n+1}$)-$C_2H_4$-, avec n = 1 à 6, de préférence n = 1 à 3 et R représente hydrogène ou méthyle,

où le groupe c) est contenu comme élément monomère dans la chaîne principale.

2. Matériau selon la revendication 1, où la chaîne principale provient des structures de base polyacrylate, polyméthacrylate ou polyacrylamide.

**3.** Matériau selon la revendication 1, où les groupes a) et/ou b) portent des groupes hydroxyéthyle et le groupe c) peut être contenu.

**4.** Matériau selon la revendication 1, **caractérisé en ce que** les colorants et les groupes à anisotropie de forme sont liés par covalence à la chaîne polymère via des écarteurs souples.

**5.** Matériau selon la revendication 1, 2, 3 ou 4, **caractérisé en ce que** les colorants de type azobenzène sont ceux présentant la formule (I) suivante:

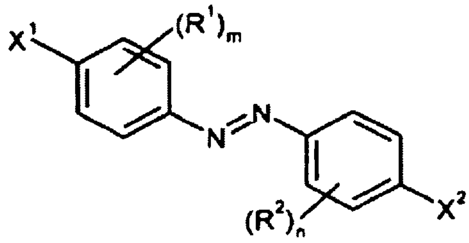

(I),

où

$R^1$ et $R^2$ représentent, indépendamment l'un de l'autre, hydrogène ou un substituant non ionique et
m et n valent, indépendamment l'un de l'autre, un nombre entier de 0 à 4, de préférence de 0 à 2,
$X^1$ et $X^2$ signifient $-X^{1'}-R^3$ ou, selon le cas, $X^{2'}-R^4$, où
$X^{1'}$ et $X^{2'}$ représentent une liaison directe, -O-, -S-, $-(N-R^5)-$, $-C(R^6R^7)-$, -(C=O)-, - (CO-O)-, - $(CO-NR^5)-$, $-(SO_2)-$, $-(SO_2-O)-$, $-(SO_2-NR^5)-$, $-(C=NR^5)-$ ou $-(CNR^8-NR^5)-$,
$R^3$, $R^4$, $R^5$ et $R^8$ représentent, indépendamment l'un de l'autre, hydrogène, $C_1$-$C_{20}$-alkyle, $C_3$-$C_{10}$- cycloalkyle, $C_2$-$C_{20}$-alcényle, $C_6$-$C_{10}$-aryle, $C_1$-$C_{20}$- alkyl-(C=O)-, $C_3$-$C_{10}$-cycloalkyl- (C=O) -, $C_2$-$C_{20}$- alcényl-(C=O)-, $C_6$-$C_{10}$-aryl-(C=O) -, $C_1$-$C_{20}$-alkyl- $(SO_2)$-, $C_3$-$C_{10}$-cycloalkyl-$(SO_2)$-, $C_2$-$C_{20}$-alcényl- $(SO_2)$- ou $C_6$-$C_{10}$-aryl-$(SO_2)$- ou
$X^{1'}-R^3$ et $X^{2'}-R^4$ peuvent représenter hydrogène, halogène, cyano, nitro, $CF_3$ ou $CCl_3$,
$R^6$ et $R^7$ représentent, indépendamment l'un de l'autre hydrogène, halogène, $C_1$-$C_{20}$-alkyle, $C_1$-$C_{20}$-alcoxy, $C_3$-$C_{10}$-cycloalkyle, $C_2$-$C_{20}$-alcényle ou $C_6$-$C_{10}$-aryle.

**6.** Matériau selon la revendication 5, **caractérisé en ce que** $R^5$ dans la formule (I) représente $C_2$-$C_{10}$-alkyl-OH.

**7.** Matériau selon l'une ou plusieurs des revendications précédentes, **caractérisé en ce que** lors de la préparation, au moins un monomère de formule (II) a été utilisé:

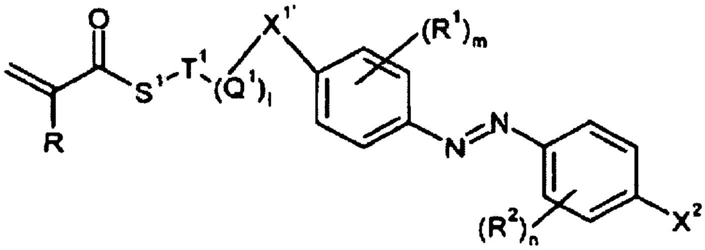

(II),

où

R représente hydrogène ou méthyle et
$X^{1'}$ représente une liaison directe, -O-, -S-, $-(N-R^5)-$, $-C(R^6R^7)-$, -(C=O)-, -(CO-O)-, $-(CO-NR^5)-$, $-(SO_2)-$, $-(SO_2-O)-$, - $(SO_2-NR^5)-$, - $(C=NR^5)-$ ou - $(CNR^8-NR^5)-$,
$Q^1$ représente -O-, -S-, $-(N-R^5)-$, $-C(R^6R^7)-$, -(C=O)-, -(CO-O)-, $(CO-NR^5)-$, $-(SO_2)-$, $-(SO_2-O)-$, $-(SO_2- NR^5)-$, $-(C=NR^8)-$, $(CNR^8-NR^5)$ -, - $-(CH_2)_p-$, p-$C_6H_4$- ou m-$C_6H_4$- ou un radical divalent des formules

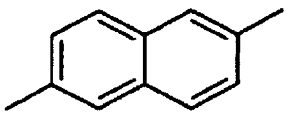

ou

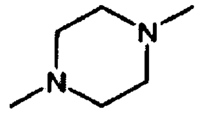

i vaut un nombre entier de 0 à 4, où, pour i > 1, les différents radicaux $Q^1$ peuvent présenter des significations différentes,
$T^1$ représente - $(CH_2)_p$-, où la chaîne peut être interrompue par -O-, -$NR^9$- , ou -$OSiR^{10}{}_2O$-,
$S^1$ représente une liaison directe, -O-, -S- ou -$NR^9$-,
$R^1$ et $R^2$ représentent, indépendamment l'un de l'autre, hydrogène ou halogène, cyano, nitro, $C_1$-$C_{20}$-alkyle, $C_1$-$C_{20}$-alcoxy, phénoxy, $C_3$-$C_{10}$-cycloalkyle, $C_2$-$C_{20}$- alcényle ou $C_6$-$C_{10}$-aryle, $C_1$-$C_{20}$-alkyl-(C=O)-, $C_6$-$C_{10}$-aryl-(C=O)-, $C_1$-$C_{20}$-alkyl-($SO_2$)-, $C_1$-$C_{20}$-alkyl- (C=O)-O-, $C_1$-$C_{20}$-alkyl- (C=O) -NH-, $C_6$-$C_{10}$-aryl- (C=O) -NH-, $C_1$-$C_{20}$-alkyl-O-(C=O)-, $C_1$-$C_{20}$-alkyl-NH-(C=O) - ou $C_6$-$C_{10}$-aryl-NH-(C=O) -,
n et m valent un nombre entier de 0 à 4 et
$X^2$ représente CN ou nitro.

**8.** Matériau selon l'une ou plusieurs des revendications précédentes, **caractérisé en ce que** lors de la préparation, au moins un monomère des formules (X) à (XIII) a été utilisé:

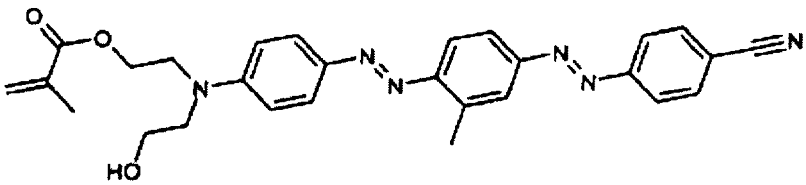

(X)

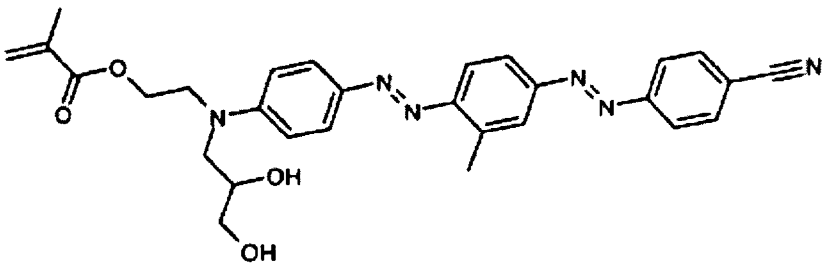

(XI)

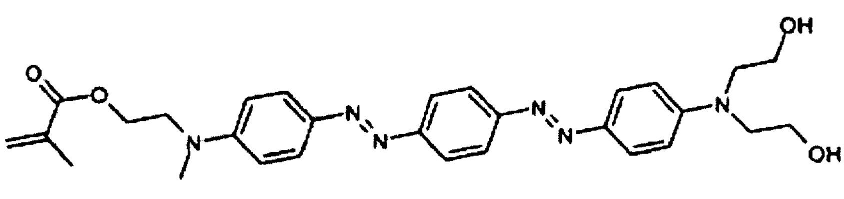

(XII)

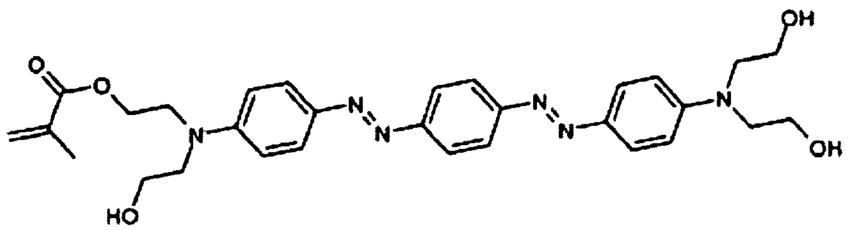

(XIII)

9. Matériau d'enregistrement pouvant être obtenu à partir d'un matériau selon l'une ou plusieurs des revendications précédentes.

10. Utilisation du matériau d'enregistrement selon la revendication 9 dans la sauvegarde optique de données.

11. Mémoire, pouvant être obtenue à partir du matériau d'enregistrement selon les revendications 9 et/ou 10.

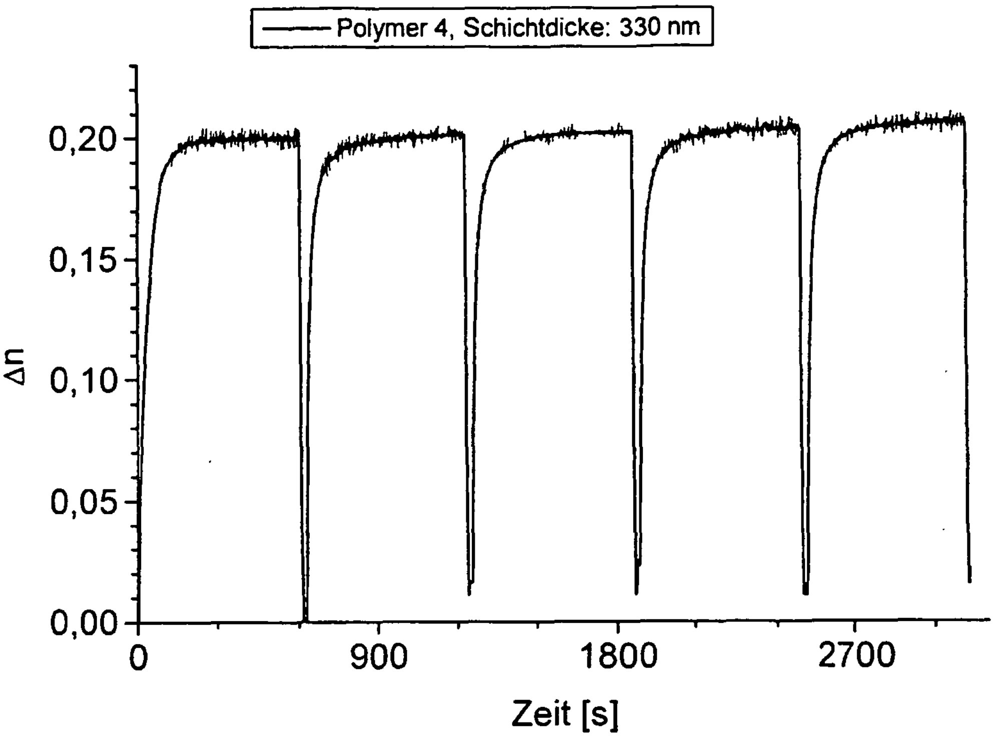
Polymer 4, Schichtdicke: 330 nm
Δn
0,20
0,15
0,10
0,05
0,00
0
900
1800
2700
Zeit [s]

Figur 1

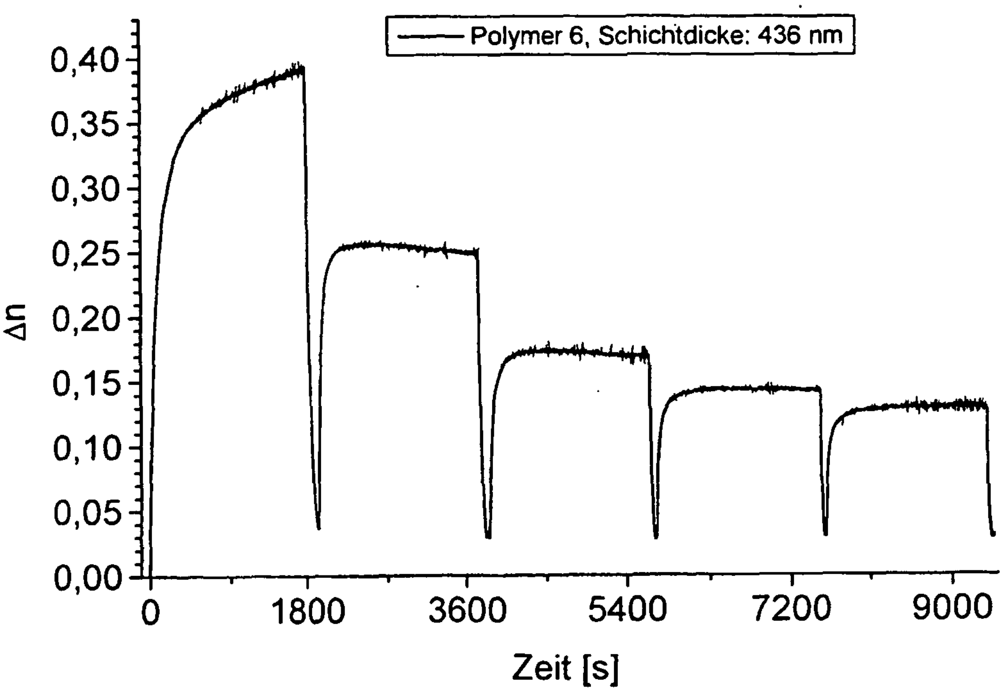
Polymer 6, Schichtdicke: 436 nm
0,40
0,35
0,30
0,25
0,20
0,15
0,10
0,05
0,00
Δn
0
1800
3600
5400
7200
9000
Zeit [s]

Figur 2

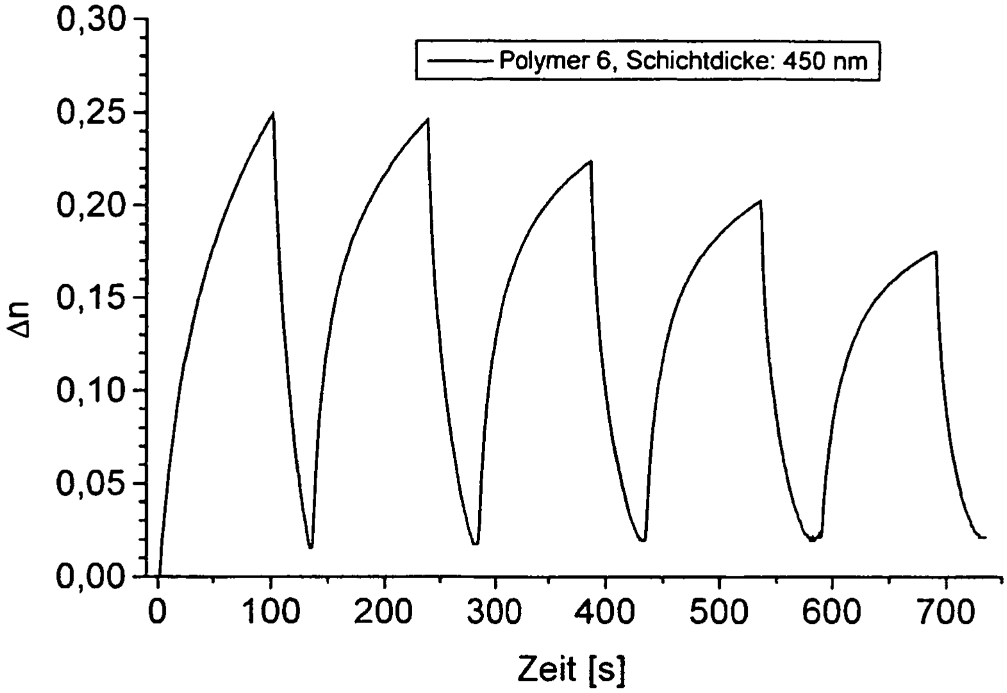
0,30
0,25
0,20
0,15
0,10
0,05
0,00
Δn
Polymer 6, Schichtdicke: 450 nm
0
100
200
300
400
500
600
700
Zeit [s]

Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1171877 A
- EP 1166187 A
- DE 10027153 A
- EP 1166188 A
- DE 100271529 A
- DE 4339862 A1
- EP 0823442 A2
- WO 0054112 A
- DD 276297 A
- DE 3808430 A
- SU 887574 A


### In der Beschreibung aufgeführte Nicht-Patentliteratur


- **G. C. Hartley.** *Nature,* 1937, vol. 140, 281
- **C. S. Paik ; H. Morawetz.** *Macromolecules,* 1972, vol. 5, 171
- **M. Eich ; J. H. Wendorff ; B. Reck ; H. Ringsdorf.** *Makromol. Chem. Rapid Commun.,* 1987, vol. 8, 59
- **Y. Q. Shen ; H. Rau.** *Macromol. Chem.,* 1991, vol. 192, 945
- **T. Todorov ; L. Nikolova ; N. Tomova.** *Appl. Opt.,* 1984, vol. 23, 4309
- **J. J. A. Couture ; R. A. Lessard.** *Appl. Opt.,* 1988, vol. 27, 3368
- **M. Eich ; J. Wendorff.** *J. Opt. Soc. Am. B,* 1990, vol. 7, 1428
- **A. Natansohn ; P. Rochon ; J. Gosselin ; S. Xie.** *Macromolecules,* 1992, vol. 25, 2268
- **H. Kelker ; R. Hatz.** Handbook of Liquid Crystals. Verlag Chemie, 1980
- Vielteilchensysteme. **L. Bergmann ; C. Schaefer.** Lehrbuch der Experimentalphysik. Verlag de Gruyter, 1992, vol. 5
- **B. Vollmer.** Grundriss der Makromolekularen Chemie. Springer-Verlag, 1962, 406-410
- *Makromolekulare Chemie,* 1984, vol. 187, 1327-1334
- *Europ. Polym,* 1982, vol. 18, 561
- *Liq. Cryst.,* 1987, vol. 2, 195